# EUROPEAN PATENT APPLICATION

(11) **EP 4 814 235 A1**
(43) Date of publication of application: **30.09.2026**
(21) Application number: 24896593.1
(22) Date of filing: 27.11.2024
(51) Int. Cl.: E04H 4/16, E02B 15/10, G05D 105/10, G05D 1/648

(54) **WATER SURFACE CLEANING ROBOT AND CONTROL METHOD THEREFOR**

(30) Priority: 27.11.2023 CN 202311598519; 27.11.2023 CN 202323211118 U; 27.11.2023 CN 202323211681 U; 27.11.2023 CN 202323213518 U; 27.11.2023 CN 202311596036; 27.11.2023 CN 202323211376 U; 03.09.2024 CN 202422157428 U
(71) Applicant: WYBOTICS Co., LTD., Tianjin 300462 (CN)
(72) Inventor: CEN, Pu, Tianjin 300462 (CN); GONG, Huchen, Tianjin 300462 (CN); WANG, Mengqi, Tianjin 300462 (CN); LI, Cheng, Tianjin 300462 (CN)
(74) Representative: Winter, Brandl - Partnerschaft mbB
(86) International application number: PCT/CN2024/135006
(87) International publication number: WO 2025/113507

(57) **Abstract**

The present disclosure discloses a water surface cleaning robot and a control method thereof. The water surface cleaning robot includes: a housing having a first side face and a second side face arranged opposite to each other in a moving direction of the water surface cleaning robot, the first side face having a liquid inlet, and the first side face and/or the second side face having a liquid outlet; a filter device arranged inside the housing; and a suction assembly arranged inside the housing, where the suction assembly includes a pump body. Under the action of the suction assembly, a liquid to be cleaned enters the filter device through the liquid inlet, and the filtered liquid drains out of the housing through the liquid outlet. The water surface cleaning robot according to embodiments of the present disclosure has the advantages of improved cleaning effect and a large cleaning range.

## Description

### CROSS REFERENCE TO RELATED APPLICATIONS

The present disclosure claims priority to Chinese Patent Application No. 202311598519X titled "WATER SURFACE CLEANING ROBOT AND CONTROL METHOD THEREOF" and filed with the China National Intellectual Property Administration on November 27, 2023, Chinese Patent Application No. 2023115960366 titled "WATER SURFACE CLEANING ROBOT" and filed with the China National Intellectual Property Administration on November 27, 2023, Chinese Patent Application No. 202323211681X titled "WATER SURFACE CLEANING ROBOT" and filed with the China National Intellectual Property Administration on November 27, 2023, Chinese Patent Application No. 2023232113760 titled "WATER SURFACE CLEANING ROBOT" and filed with the China National Intellectual Property Administration on November 27, 2023, Chinese Patent Application No. 2023232135187 titled "WATER SURFACE CLEANING ROBOT" and filed with the China National Intellectual Property Administration on November 27, 2023, Chinese Patent Application No. 2023232111182 titled "SWIMMING POOL CLEANING ROBOT" and filed with the China National Intellectual Property Administration on November 27, 2023, and Chinese Patent Application No. 2024221574289 titled "POOL CLEANING ROBOT" and filed with the China National Intellectual Property Administration on September 3, 2024, the entire contents of which are incorporated herein by reference.

### TECHNICAL FIELD

The present disclosure relates to the field of liquid surface cleaning technology, and more particularly, to a water surface cleaning robot and a control method thereof.

### BACKGROUND

A swimming pool cleaning robot in related technologies is typically provided with a drive structure for driving it to move, and the drive structure is positioned outside the housing of the swimming pool cleaning robot. For this reason, it is easy for the drive structure to interfere with a pool wall when the swimming pool cleaning robot cleans pool edges or corners of a swimming pool.

### SUMMARY

The present disclosure aims to solve at least one of technical problems in the prior art. Therefore, one objective of the present disclosure is to propose a water surface cleaning robot, which has the advantages of improved cleaning effect and a large cleaning range.

In a first aspect, the present disclosure proposes a water surface cleaning robot, which includes: a housing having a first side face and a second side face arranged opposite to each other in a moving direction of the water surface cleaning robot, where the first side face is provided with a liquid inlet, and the first side face and/or the second side face are provided with a liquid outlet; a filter device arranged inside the housing; and a suction assembly arranged inside the housing, where the suction assembly includes a pump body. Under the action of the suction assembly, a liquid to be cleaned enters the filter device through the liquid inlet, and the filtered liquid drains out of the housing through the liquid outlet.

According to the embodiments of the present disclosure, in one aspect, the water surface cleaning robot can facilitate, through its own movement, the liquid to be cleaned to enter the filter device. In another aspect, the flow rate of the liquid to be cleaned entering the filter device is increased under the action force of a suction device, resulting in improved cleaning effect. Moreover, because the suction device is arranged inside the housing, the suction device does not interfere with a pool wall, so the water surface cleaning robot can clean pool edges or corners of a swimming pool, with a large cleaning range.

In a second aspect, the present disclosure proposes a control method for a water surface cleaning robot. The water surface cleaning robot is controlled to carry out garbage cleaning on a side and/or a corner. The water surface cleaning robot includes: a housing having a first side face and a second side face arranged opposite to each other in a moving direction of the water surface cleaning robot, where the first side face is provided with a liquid inlet, and the first side face and/or the second side face are provided with a liquid outlet; a filter device arranged inside the housing; and a suction assembly arranged inside the housing, where the suction assembly includes a pump body. Under the action of the suction assembly, a liquid to be cleaned enters the filter device through the liquid inlet, and the filtered liquid drains out of the housing through the liquid outlet.

### BRIEF DESCRIPTION OF THE DRAWINGS

To describe the technical solutions of the embodiments of the present disclosure or those of the prior art more clearly, the accompanying drawings required for describing the embodiments or the prior art will be briefly introduced below. Apparently, the accompanying drawings in the following description are merely some embodiments of the present disclosure. To those of ordinary skills in the art, other accompanying drawings can also be derived from these accompanying drawings without creative efforts.
FIG. 1 is a schematic structural diagram of a water surface cleaning robot with a liquid inlet in an open state according to an embodiment of the present disclosure;
FIG. 2 is a schematic structural diagram of the water surface cleaning robot with the liquid inlet in a closed state according to an embodiment of the present disclosure;
FIG. 3 is a schematic structural diagram of an outer shell of the water surface cleaning robot according to an embodiment of the present disclosure;
FIG. 4 is a schematic structural diagram of an impeller, a front drainage port, and a rear drainage port of the water surface cleaning robot according to an embodiment of the present disclosure;
FIG. 5 is a schematic structural diagram of a filter device of the water surface cleaning robot according to an embodiment of the present disclosure;
FIG. 6 is another schematic structural diagram of the water surface cleaning robot according to an embodiment of the present disclosure.
FIG. 7 is a schematic structural diagram of the water surface cleaning robot with a limiting component in a limiting state according to an embodiment of the present disclosure;
FIG. 8 is a schematic structural diagram of the water surface cleaning robot with the limiting component in a separated state according to an embodiment of the present disclosure;
FIG. 9 is a schematic structural diagram of the filter device of the water surface cleaning robot according to an embodiment of the present disclosure;
FIG. 10 is still another schematic structural diagram (from a top view) of the water surface cleaning robot according to an embodiment of the present disclosure;
FIG. 11 is a schematic cross-sectional view taken along an F-F direction in FIG. 10;
FIG. 12 is an enlarged view schematically showing Portion H in FIG. 11;
FIG. 13 is another schematic structural diagram of the filter device according to an embodiment of the present disclosure;
FIG. 14 is a schematic structural diagram of a second part of the filter device according to an embodiment of the present disclosure; and
FIG. 15 is a schematic structural diagram of a first part of the filter device according to an embodiment of the present disclosure.

Reference numerals in the accompanying drawings:
water surface cleaning robot 1;
housing 100; first side face 101; second side face 102; first side edge 103; second side edge 104; installation cavity 105; outer shell 110; receiving cavity 111; liquid channel 112; oblique segment 113; first liquid channel 114; second liquid channel 115; front protrusion 116; rear protrusion 117;
filter device 120; liquid inlet 121; filter cavity 122; limit block 123; shaft hole 124; impeller 140; front water inlet 150; first front water inlet 151; second front water inlet 152; rear water inlet 160; first rear water inlet 161; second rear water inlet 162; anti-collision block 170; front drainage port 180; rear drainage port 190;
floating plate assembly 200; first side 201; second side 202; floating plate skeleton 210; first transverse beam 211; second transverse beam 212; first vertical beam 213; second vertical beam 214; third vertical beam 215; rotating shaft 230; through hole 240;
photovoltaic power generation device 300; obstacle 400;
first positioning structure 125; box body 220; through hole 221;
limiting component 500; second positioning structure 310; inclined plane 320; elastic arm 330; first support arm 340;
elastic element 600; first guide wheel 700; second guide wheel 800;
stopping portion 1012; first box wall 126; limiting protrusion 1261; first part 127; main body portion 1271; end wall 1272;
second part 128; snap-fit protrusion 1273; clamping slot 1281; limiting lug 250; groove 260;
locking member 900; second support arm 910; and connecting arm 920.

### DETAILED DESCRIPTION

To make the objectives, technical solutions and advantages of the present disclosure clearer, the embodiments of the present disclosure will be further described in detail below with reference to the accompanying drawings.

When the accompanying drawings are mentioned in the following descriptions, the same numbers in different drawings represent the same or similar elements, unless otherwise represented. The implementations set forth in the following description of exemplary embodiments do not represent all implementations consistent with the present disclosure. Instead, they are merely examples of devices and methods consistent with some aspects related to the present disclosure as recited in the appended claims.

In the description of the present disclosure, it should be understood that the terms such as "first" and "second" are used only for purposes of description and should be understood as indicating or implying relative importance. The specific significations of the above terms in the present disclosure may be understood in the light of specific conditions by those of ordinary skills in the art. Furthermore, in the description of the present disclosure, unless otherwise specified, "a plurality of" refers to two or more. The "and/or" used for describing an association relationship between associated objects represents presence of three relationships. For example, "A and/or B" may represent presence of A only, presence of both A and B, and presence of B only. Character "/" generally indicates that an "or" relationship is present between the associated objects.

Unless otherwise defined, all technical and scientific terms employed herein have the same meaning as commonly understood by those of ordinary skills in the art to which the present disclosure belongs. The terms employed in the specification of the present disclosure are merely for the purpose of describing specific embodiments and are not intended for limiting the present disclosure. As used herein, the term "and/or" includes any and all combinations of one or more of the associated listed items.

A water surface cleaning robot 1 according to the embodiments of the present disclosure is described below with reference to the accompanying drawings.

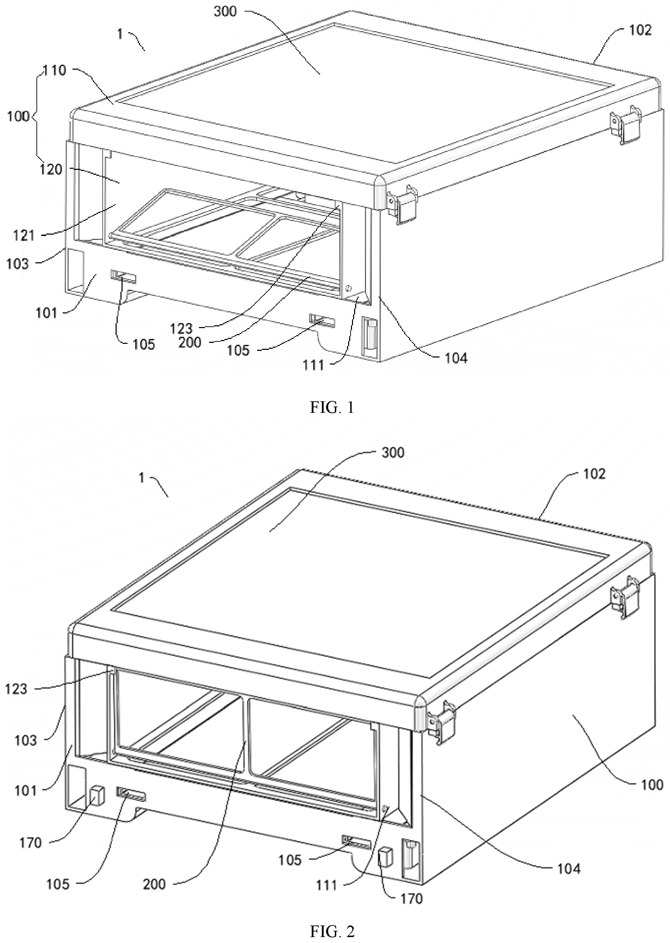

As shown in FIG. 1 and FIG. 2, the water surface cleaning robot 1 according to the embodiments of the present disclosure includes a housing 100, a filter device 120, a suction assembly, and a controller.

The housing 100 has a first side face 101 and a second side face 102 arranged opposite to each other in a moving direction of the water surface cleaning robot 1. The first side face 101 is provided with a liquid inlet 121, and the first side face 101 and/or the second side face 102 are provided with a liquid outlet. The filter device 120 is arranged inside the housing 100. The suction assembly is arranged inside the housing 100 and includes a pump body. Under the action of the suction assembly, a liquid to be cleaned enters the filter device 120 through the liquid inlet 121, and the filtered liquid drains out of the housing 100 through the liquid outlet. The controller is electrically connected to the suction assembly.

It should be noted that a direction indicated by Arrow A is a direction in which the water surface cleaning robot 1 moves towards an opening direction of the liquid inlet 121, and a direction indicated by Arrow B is a direction of water flow when the water surface cleaning robot 1 moves towards a liquid inlet direction of the liquid inlet 121.

In some embodiments of the present disclosure, the traveling direction of the water surface cleaning robot 1 is a longitudinal direction, and the pump body is arranged on two sides of the housing 100 along a transverse direction.

For example, the filter device 120 may be provided with a filter cavity 122, and the filter cavity 122 is respectively communicated with the liquid inlet 121 and the liquid outlet.

In addition, the water surface cleaning robot 1 may be used in water storage regions such as swimming pools, rivers, and lakes to clean garbage such as leaves and plastics in these water storage regions. Moreover, the water surface cleaning robot 1 may float on a liquid surface, and is mainly used for cleaning the liquid surface, or the water surface cleaning robot 1 may sink below the liquid surface to clean the entire liquid.

In the water surface cleaning robot 1 according to the embodiments of the present disclosure, the liquid inlet 121 is provided on the first side face 101, and at least one of the first side face 101 and the second side face 102 is provided with the liquid outlet. The filter device 120 is provided inside the housing 100.

When the water surface cleaning robot 1 is moving and the liquid inlet 121 is facing forward, the liquid to be cleaned can easily enter the filter device 120 through the liquid inlet 121. The filter device 120 filters the liquid to be cleaned, and the garbage in the liquid to be cleaned can remain in the filter device 120. Then, the filtered liquid flows out of the filter device 120 and flows back into water through the liquid outlet.

For example, both the first side face 101 and the second side face 102 may be provided with liquid outlets, wherein the liquid outlet of the first side face 101 and the liquid outlet of the second side face 102 may be selectively opened or closed. When the filtered liquid flows out through the liquid outlet of the first side face 101, the water surface cleaning robot 1 can be driven to move in a direction of the second side face 102. When the filtered liquid flows out through the liquid outlet of the second side face 102, the water surface cleaning robot 1 can be driven to move in a direction of the first side face 101.

In addition, the suction assembly is arranged inside the housing 100 and includes a pump body. Under the action of the suction assembly, the liquid to be cleaned enters the filter device 120 through the liquid inlet 121, and the filtered liquid drains out of the housing 100 through the liquid outlet.

By arranging the suction assembly, the flow rate of the liquid to be cleaned entering the filter device 120 through the liquid inlet 121 is increased. Even when the water surface cleaning robot 1 is moving and the liquid inlet 121 is facing backwards, the acting force of the suction assembly can still suck the liquid to be cleaned into the filter device 120 via the liquid inlet 121. The water surface cleaning robot 1 can ensure effective filtration of the liquid to be cleaned in different motion modes, thereby improving the cleaning effect of the water surface cleaning robot 1.

The suction assembly is arranged in the housing 100. Therefore, when the water surface cleaning robot 1 is used in a swimming pool, even when the water surface cleaning robot 1 is positioned at a pool edge or corner of the swimming pool, the suction assembly does not interfere or collide with a pool wall of the swimming pool. Therefore, the water surface cleaning robot 1 can clean the pool edge or corner of the swimming pool, thereby improving the cleaning range of the water surface cleaning robot 1 and the cleaning effect on the pool wall or corner of the swimming pool.

Thus, the water surface cleaning robot 1 according to the embodiments of the present disclosure has the advantages of improved cleaning effect and a large cleaning range.

As shown in FIGS. 1 to 4, the water surface cleaning robot 1 according to the embodiments of the present disclosure includes a housing 100, a distance sensor, a pump body, and a controller. The distance sensor may be an infrared sensor.

The water surface cleaning robot 1 moves in a horizontal direction, and the housing 100 has the first side face 101 and the second side face 102 arranged opposite to each other in the moving direction of the water surface cleaning robot 1. The housing 100 is provided with the liquid inlet 121 and the filter cavity 122 that are sequentially communicated, where the liquid inlet 121 is arranged on the first side face 101.

In the water surface cleaning robot 1 according to the embodiments of the present disclosure, the housing 100 is provided with the liquid inlet 121 and the filter cavity 122 that are sequentially communicated. The housing 100 has the first side face 101 and the second side face 102 arranged opposite to each other in the moving direction of the water surface cleaning robot 1, and the liquid inlet 121 is provided on the first side face 101. In this way, when the water surface cleaning robot is moving in the direction of the first side face 101, a large amount of the liquid to be cleaned can enter the filter cavity 122 through the liquid inlet 121, such that the garbage in the liquid to be cleaned can be stored in the filter cavity 122.

At least one distance sensor is provided on the first side face 101 and/or the second side face 102, and is configured to detect a positional relationship of the water surface cleaning robot 1. Wherein, the distance sensor may be an infrared sensor. In this way, during its movement, the water surface cleaning robot 1 can continuously obtain a distance between itself and the pool wall, which can avoid collision, thus improving safety.

At least two distance sensors are provided on the first side face 101 adjacent to two ends of the housing 100, and each of the at least two distance sensors is configured to detect the distance between a corresponding end and an external object. Two distance sensors are arranged on the first side face 101, such that multi-point distance detection can be performed on the first side face 101, which effectively avoids contact between one end of the housing 100 and the pool wall when the housing 100 makes a turn relative to the pool wall, thereby greatly improving the safety of the water surface cleaning robot 1 during movement.

At least two distance sensors are provided on the second side face 102 adjacent to two ends of the housing 100, and each of the at least two distance sensors is configured to detect the distance between a corresponding end and an external object. Two distance sensors are arranged on the second side face 102, such that multi-point distance detection can be performed on the second side face 102, which effectively avoids contact between one end of the housing 100 and the pool wall when the housing 100 makes a turn relative to the pool wall, thereby greatly improving the safety of the water surface cleaning robot 1 during movement.

At least one anti-collision block 170 is provided on the first side face 101 and/or the second side face 102. By arranging the anti-collision block 170, when the water surface cleaning robot 1 and the pool wall approach each other, the anti-collision block 170 comes into contact with the pool wall before the housing 100, thereby avoiding the contact between the housing 100 and the pool wall, which reduces probability of damage to the housing 100 due to collision, and thus prolonging service life of the water surface cleaning robot 1.

As shown in FIG. 1 and FIG. 2, the housing 100 is provided with an energy storage device, which includes a photovoltaic power generation device 300 configured to supply power to the water surface cleaning robot 1. The photovoltaic power generation device 300 is arranged at a top of the housing 100, and the photovoltaic power generation device 300 is higher than the liquid surface of the liquid to be cleaned.

As shown in FIGS. 1 to 4, the water surface cleaning robot 1 according to the embodiments of the present disclosure includes the housing 100 and the pump body. At least one of the pump body and the distance sensor is electrically connected to the photovoltaic power generation device 300.

For example, a battery may be installed inside the housing 100, and the battery may be connected to the pump body to supply power to the pump body. The photovoltaic power generation device 300 may be connected to the battery to charge the battery. The photovoltaic power generation device 300 may be directly connected to the pump body to supply power to the pump body. The photovoltaic power generation device 300 may also be separately connected to the pump body and the battery to supply power to the pump body and charge the battery.

In addition, the battery may also be connected to the distance sensor to supply power to the distance sensor. The photovoltaic power generation device 300 may also be connected to the distance sensor to supply power to the distance sensor.

By arranging the photovoltaic power generation device 300 at the top of the housing 100, in one aspect, the endurance of the water surface cleaning robot 1 can be prolonged, and in another aspect, the space utilization rate of the housing 100 can be increased without causing adverse impact on the usage of the internal space of the housing 100. Moreover, pollution can be avoided because solar energy is a clean energy source.

In some embodiments, the distance sensor is arranged on the housing 100, the distance sensor is configured to detect whether there is an obstacle 400 in an orientation of the first side face 101 and/or detect a distance between the water surface cleaning robot 1 and the obstacle 400. The pump body is arranged in the housing 100. The controller is connected to the distance sensor and the pump body, respectively, and is configured to control the operating state of the pump body based on feedback results from the distance sensor.

It should be noted that the orientation of the first side face refers to a side where the first side face of the housing 100 is located, that is, a direction of the liquid inlet 121 away from the housing 100.

When the water surface cleaning robot 1 of this embodiment is moving in the direction of the first side face 101, a large amount of the liquid to be cleaned can enter the filter cavity 122 through the liquid inlet 121, such that the garbage in the liquid to be cleaned can be stored in the filter cavity 122.

In addition, the pump body is arranged inside the housing 100. Through the operation of the pump body, the liquid to be cleaned can be sucked into the filter cavity 122 through the liquid inlet 121, thereby increasing flow velocity of the liquid to be cleaned flowing into the filter cavity 122, such that the garbage in the liquid to be cleaned can enter the filter cavity 122 more quickly, thereby improving efficiency of the water surface cleaning robot 1 in cleaning the garbage in the liquid to be cleaned. Regardless of the motion mode in which the water surface cleaning robot 1 operates, the pump body can operate properly. For example, when the water surface cleaning robot 1 is in a forward moving state, a backward moving state or a quiescent state, the pump body can operate to further optimize the effect of the water surface cleaning robot 1 in cleaning the liquid to be cleaned.

In addition, the water surface cleaning robot 1 moves in the horizontal direction, and the distance sensor is arranged on the housing 100. The distance sensor is configured to detect whether there is an obstacle 400 in the opening direction of the liquid inlet 121, and to detect the distance between the water surface cleaning robot 1 and the obstacle 400.

The water surface cleaning robot 1 moves in the horizontal direction. Therefore, when the water surface cleaning robot 1 is used in the swimming pool, the water surface cleaning robot 1 gradually approaches the pool wall, where the obstacle 400 is the pool wall. When the water surface cleaning robot 1 gets closer to the pool wall, the water surface cleaning robot 1 may stop moving and remain stationary to maintain a certain distance between the liquid inlet 121 and the pool wall, thereby avoiding the collision between the housing 100 and the obstacle 400 and reducing the probability of damage to the water surface cleaning robot 1. At this moment, the controller controls, based on the detection results from the distance sensor, to start the pump body or increase operating power of the pump body (it is to be understood that during the movement of the water surface cleaning robot 1, the pump body may not start and the garbage is brought into the filter cavity 122 solely via water flow, or the pump body may also start but operate at a lower power to assist in guiding the garbage, thereby reducing energy consumption, or the pump body may also operate at a higher power according to environment to be cleaned, thereby improving the cleaning efficiency), to suck a large amount of the liquid to be cleaned adjacent to the pool wall, such that a large amount of garbage adjacent to the pool wall can enter the filter cavity 122. In this way, the effective cleaning of the garbage adjacent to the pool wall can be achieved while avoiding the contact between the water surface cleaning robot 1 and the pool wall, and the probability of damage is reduced.

When the water surface cleaning robot 1 is used in the rivers or lakes, the obstacle 400 may be buildings, raised soil platforms, or embankments in the rivers or lakes. When the water surface cleaning robot 1 gets closer to the obstacle 400, the water surface cleaning robot 1 may stop moving and remain stationary to maintain a certain distance between the liquid inlet 121 and the obstacle 400, thereby avoiding the collision between the housing 100 and the obstacle 400 and reducing the probability of damage to the water surface cleaning robot 1. At this moment, the controller controls, based on the detection results from the distance sensor, to start the pump body or increase the operating power of the pump body (it is to be understood that during the movement of the water surface cleaning robot 1, the pump body may not start and the garbage is brought into the filter cavity 122 solely via water flow, or the pump body may also start but operate at a lower power to assist in guiding the garbage, thereby reducing the energy consumption, or the pump body may also operate at a higher power according to the environment to be cleaned, thereby improving the cleaning efficiency), to suck a large amount of the liquid to be cleaned adjacent to the obstacle 400, such that a large amount of garbage adjacent to the obstacle 400 can enter the filter cavity 122. In this way, the effective cleaning of the garbage adjacent to the obstacle 400 can be achieved while avoiding the contact between the water surface cleaning robot 1 and the obstacle 400, and the probability of damage is reduced.

Thus, the water surface cleaning robot 1 according to this embodiment can effectively clean the liquid to be cleaned adjacent to the obstacle 400, with improved cleaning effect and reduced probability of damage.

When the distance sensor detects that there is an obstacle 400 in the opening direction of the liquid inlet 121:
the pump body operates at a first power when the distance between the obstacle 400 and the water surface cleaning robot 1 is greater than a preset value;
the pump body operates at a second power when the distance between the obstacle 400 and the water surface cleaning robot 1 is not greater than the preset value, the second power being greater than the first power.

Specifically, when the distance between the obstacle 400 and the water surface cleaning robot 1 is greater than the preset value, the distance between the obstacle 400 and the water surface cleaning robot 1 is farther. Therefore, the water surface cleaning robot 1 may continue moving towards the obstacle 400. At this moment, the pump body operates at the lower first power, to assist in guiding flow of the liquid to be cleaned. At this moment, the energy consumption is low, and the endurance of the water surface cleaning robot 1 can be ensured. Alternatively, the pump body may also operate at a higher power for cleaning according to the environment to be cleaned.

When the distance between the obstacle 400 and the water surface cleaning robot 1 is not greater than the preset value, the distance between the obstacle 400 and the water surface cleaning robot 1 is nearer. Therefore, the water surface cleaning robot 1 stops moving towards the obstacle 400 to avoid the collision between the housing 100 and the obstacle 400, thereby reducing the probability of damage to the water surface cleaning robot 1. At this moment, the pump body operates at the higher second power, such that a large amount of the liquid to be cleaned can be guided to flow into the filter cavity 122, thereby increasing the speed of filtering the garbage.

The first side face 101 has a first side edge 103 and a second side edge 104 arranged opposite to each other. The first side edge 103 and the second side edge 104 are both perpendicular to the liquid surface of the liquid to be cleaned. A plurality of distance sensors are provided, at least one of the plurality of distance sensors is close to the first side edge 103, and at least another one of the plurality of distance sensors is close to the second side edge 104.

By arranging the at least two distance sensors and arranging the two distance sensors close to the first side edge 103 and the second side edge 104, respectively, the distance between a side of the first side face 101 in the horizontal direction and the obstacle 400 can be detected, thereby effectively adjusting the moving direction and the moving state of the water surface cleaning robot 1. For example, the moving direction includes moving forward in a straight line, moving forward to the left, moving forward to the right, moving backward in a straight line, moving backward to the left, and moving backward to the right. The moving state include moving forward, moving backward, and staying still.

A first distance from the first side edge 103 to the obstacle 400 is obtained according to a detection result from the at least one distance sensor close to the first side edge 103. A second distance from the second side edge 104 to the obstacle 400 is obtained according to a detection result from the at least one distance sensor close to the second side edge 104. When the first distance is not equal to the second distance, the controller controls the pump body corresponding to the first side edge 103 to act and/or the controller controls the pump body corresponding to the second side edge 104 to act, such that the first distance is equal to the second distance.

Specifically, a plurality of pump bodies may be provided, and one of the plurality of pump bodies corresponds to the first side edge 103 in position, so this pump body may drive the first side edge 103 to move, such as driving the first side edge 103 to move forward or backward. Another one of the plurality of pump bodies corresponds to the second side edge 104 in position, so this pump body may control the second side edge 104 to move, such as driving the second side edge 104 to move forward or backward.

By comparing a magnitude relationship between the first distance and the second distance, it can be determined whether the first side face 101 is parallel to the obstacle 400. When the first side face 101 is not parallel to the obstacle 400, the first distance between the first side edge 103 and the obstacle 400 is adjusted, or the second distance between the second side edge 104 and the obstacle 400 is adjusted, or the first distance between the first side edge 103 and the obstacle 400 and the second distance between the second side edge 104 and the obstacle 400 are simultaneously adjusted.

In this way, it can be ensured that the first side face 101 is parallel to the obstacle 400, such that each region of the liquid inlet 121 has the same ability in guiding the liquid to be cleaned, to more effectively clean the garbage near the obstacle 400.

When the first distance is greater than the second distance and the second distance is equal to zero, the controller controls the pump body corresponding to the first side edge 103 to act such that both the first distance and the second distance are equal to zero. Similarly, when the second distance is greater than the first distance and the first distance is equal to zero, the controller controls the pump body corresponding to the second side edge 104 to act such that both the first distance and the second distance are equal to zero.

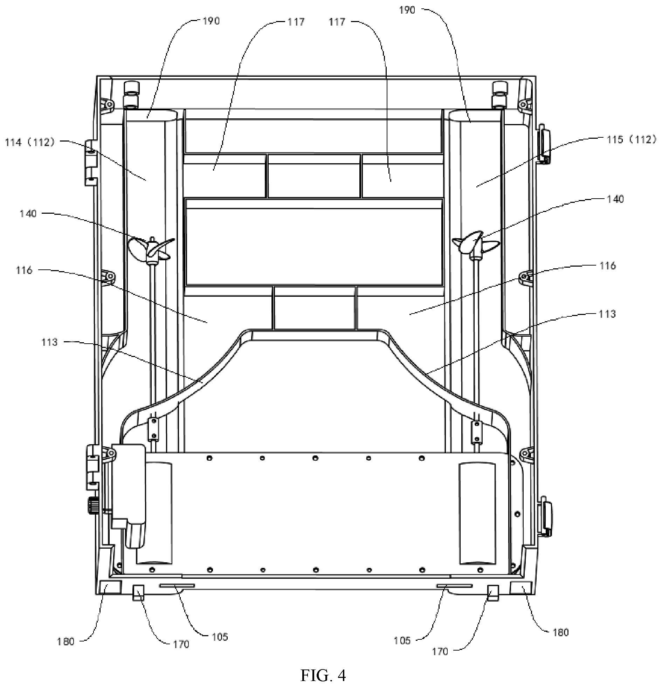

As shown in FIG. 4, the first side face 101 is provided with a front drainage port 180, and the second side face 102 is provided with a rear drainage port 190. The water surface cleaning robot 1 has a forward moving mode and a backward moving mode. The pump body includes an impeller 140. When the water surface cleaning robot 1 is in the forward moving mode, the impeller 140 rotates in a first direction to guide the liquid in the housing 100 to flow towards the rear drainage port 190. When the water surface cleaning robot 1 is in the backward moving mode, the impeller 140 rotates in a second direction opposite to the first direction to guide the liquid in the housing 100 to flow towards the front drainage port 180.

By adjusting the rotation direction of the impeller 140, the flow direction of the liquid inside the housing 100 can be adjusted. When the impeller 140 rotates in the first direction, the liquid inside the housing 100 flows out through the rear drainage port 190, which provides a forward reaction force to the water surface cleaning robot 1, to push the water surface cleaning robot 1 to move forward. When the impeller 140 rotates in the second direction, the liquid inside the housing 100 flows out through the front drainage port 180, which provides a backward reaction force to the water surface cleaning robot 1, to push the water surface cleaning robot 1 to move backward.

In this way, the pump body not only can guide the liquid to be cleaned into the filter cavity 122, but also can adjust the moving direction of the water surface cleaning robot 1. The pump body can achieve a variety of functions, and reduce the number of components. The water surface cleaning robot 1 has a simple structure, and thus the cost and weight thereof can be correspondingly reduced.

As shown in FIG. 1 and FIG. 2, the first side face 101 is provided with an installation cavity 105, in which a distance sensor is arranged. By arranging the installation cavity 105, in one aspect, the distance sensor can be protected, and thus the probability of damage to the distance sensor can be reduced. In another aspect, the installation cavity 105 is constructed in the first side face 101. When the water surface cleaning robot 1 moves forward, the distance sensor inside the installation cavity 105 can more reliably detect whether there is an obstacle 400 in the forward direction of the water surface cleaning robot 1, and detect the distance between the obstacle 400 and the first side face 101.

As shown in FIG. 1 and FIG. 2, the first side face 101 is provided with a plurality of anti-collision blocks 170 arranged along the horizontal direction. The arrangement direction of the plurality of anti-collision blocks 170 is perpendicular to the moving direction of the housing 100. By arranging the plurality of anti-collision blocks 170, when the water surface cleaning robot 1 moves in the direction of the first side face 101, the anti-collision blocks 170 cover a larger area of the first side face 101 of the water surface cleaning robot 1, thereby further reducing the probability of collision with the first side face 101.

Sizes of the anti-collision blocks 170 beyond the first side face 101 range from 5 mm to 20 mm. In one aspect, the sizes of the anti-collision blocks 170 beyond the first side face 101 are set to be not less than 5 mm, which can provide sufficient clearance between the housing 100 and the obstacle 400, making it beneficial for the water surface cleaning robot 1 to collect the garbage near the obstacle 400. In another aspect, the sizes of the anti-collision blocks 170 beyond the first side face 101 are set to be not greater than 20 mm, which can prevent from causing adverse impact on proper operation of the water surface cleaning robot 1 due to overlength of the anti-collision blocks 170, thereby reducing the costs and the weight.

As shown in FIG. 1 and FIG. 2, a portion of the liquid inlet 121 is positioned above the liquid surface, and another portion of the liquid inlet 121 is positioned below the liquid surface. That is, the upper side of the liquid inlet 121 is higher than the liquid surface, and the lower side of the liquid inlet 121 is lower than the liquid surface. The water surface cleaning robot 1 floats on the liquid surface. For example, the water surface cleaning robot 1 may be provided with a buoyancy device. Because the garbage in the water storage region mainly floats on the liquid surface, the water surface cleaning robot 1 may clean the liquid surface with higher cleaning efficiency.

In addition, the distance sensor is positioned below the liquid inlet 121. When the water surface cleaning robot 1 is used in a swimming pool, because the water surface cleaning robot 1 floats on the liquid surface, if the distance sensor is higher than the liquid surface, the distance sensor may be higher than the pool wall of the swimming pool. Similarly, when the water surface cleaning robot 1 is used in a river or lake, if the distance sensor is higher than the liquid surface, the distance sensor may be higher than the edge of the river and the surrounding wall of the lake. Therefore, the distance sensor is arranged below the liquid inlet 121 to ensure that the distance sensor is positioned below the liquid surface, thereby ensuring accuracy of the distance sensor in detecting the obstacle 400.

In addition, the anti-collision block 170 is positioned below the liquid inlet 121. When the water surface cleaning robot 1 is used in a swimming pool, because the water surface cleaning robot 1 floats on the liquid surface, if the anti-collision block 170 is higher than the liquid surface, the anti-collision block 170 may be higher than the pool wall of the swimming pool. Similarly, when the water surface cleaning robot 1 is used in a river or a lake, if the anti-collision block 170 is higher than the liquid surface, the anti-collision block 170 may be higher than the edge of the river and the surrounding wall of the lake. Therefore, the anti-collision block 170 is arranged below the liquid inlet 121 to ensure that the anti-collision block 170 is positioned below the liquid surface, such that the anti-collision block 170 provides a more reliable protection for the housing 100.

As shown in FIGS. 1 to 3, the housing 100 includes an outer shell 110. The outer shell 110 is provided with a receiving cavity 111, the filter device 120 is detachably arranged in the receiving cavity 111, and the filter cavity 122 is arranged in the filter device 120. At least one of the distance sensor and the anti-collision block 170 is arranged on the outer shell 110.

After the water surface cleaning robot 1 cleans the liquid surface, the filter device 120 can be disassembled from the receiving cavity 111, to dump the garbage in the filter cavity 122 of the filter device 120, and then the filter device 120 can be installed in the receiving cavity 111. The water surface cleaning robot 1 is reusable with improved effectiveness, and there is no need to lift the water surface cleaning robot 1 as a whole to dump the garbage, thereby improving convenience of dumping the garbage for the water surface cleaning robot 1.

Because of the relative position between the filter device 120 and the outer shell 110, and because of the fact that the filter device 120 is arranged inside the outer shell 110, the arrangement of the distance sensor on the outer shell 110 can more accurately determine the distance between the obstacle 400 detected by the distance sensor and the outer shell 110, and can more accurately determine the distance between the obstacle 400 detected by the distance sensor and an outer surface of the water surface cleaning robot 1, thereby effectively controlling switchover of the operating state of the water surface cleaning robot 1.

After multiple disassembly operations of the filter device 120 from the outer shell 110, the relative positional relationship between the filter device 120 and the outer shell 110 may change, and the filter device 120 is arranged inside the outer shell 110. Therefore, arranging the anti-collision block 170 on the outer shell 110 can more reliably prevent the outer shell 110 from being collided, to effectively protect the outer shell 110, thereby reducing the probability of damage to the outer shell 110.

As shown in FIG. 1 and FIG. 2, the water surface cleaning robot 1 according to the embodiments of the present disclosure includes the housing 100 and a floating plate assembly 200.

The floating plate assembly 200 is provided at the liquid inlet 121, and the floating plate assembly 200 is rotatably arranged on the housing 100 or the filter device 120 between an open position and a closed position. When the water surface cleaning robot 1 is in a quiescent state, the floating plate assembly 200 stays in the closed position under an action of buoyancy of the liquid to be cleaned. When the floating plate assembly 200 is opened, at least a portion of the liquid inlet 121 is in the open state to allow the liquid to be cleaned to enter.

That is, the density of the floating plate assembly 200 is less than that of the liquid to be cleaned, so the floating plate assembly 200 stays in the closed position under the action of the buoyancy of the liquid to be cleaned. That is, when the water surface cleaning robot 1 is in the quiescent state, the floating plate assembly 200 stays in the closed position under the action of the buoyancy of the liquid to be cleaned.

In the water surface cleaning robot 1 according to the embodiments of the present disclosure, the housing 100 is provided with the liquid inlet 121 and the filter cavity 122, where the filter cavity 122 is communicated with the liquid inlet 121. The floating plate assembly 200 is rotatably arranged on the housing 100 between the open position and the closed position. The liquid inlet 121 is open when the floating plate assembly 200 is in the open position, and at least a portion of the liquid inlet 121 is covered when the floating plate assembly 200 is in the closed position.

For example, the rotation axis of the floating plate assembly 200 may be a physical axis of rotation, that is, the rotation axis of the floating plate assembly 200 passes through the floating plate assembly 200. Alternatively, the rotation axis of the floating plate assembly 200 may be a virtual axis, that is, the rotation axis of the floating plate assembly 200 does not pass through the floating plate assembly 200, enabling an extended motion range of the floating plate assembly 200.

When the floating plate assembly 200 is in the open position, the garbage in the liquid can enter the filter cavity 122 through the liquid inlet 121. When the floating plate assembly 200 is in the closed position, the garbage in the filter cavity 122 is blocked by the floating plate assembly 200 to reduce probability of the garbage in the filter cavity 122 flowing out of the filter cavity 122.

In addition, the density of the floating plate assembly 200 is less than that of the liquid to be cleaned, so the floating plate assembly 200 stays in the closed position under the action of the buoyancy of the liquid to be cleaned. When the water surface cleaning robot 1 moves in the direction of the first side face 101, the liquid to be cleaned pushes the floating plate assembly 200 to switch from the closed position to the open position. The liquid to be cleaned may include water, other single type of liquid or mixed liquid.

That is, the density of the floating plate assembly 200 is less than that of the liquid to be cleaned. When the water surface cleaning robot 1 is motionless (i.e. in the quiescent state), the buoyancy exerted by the liquid to be cleaned on the floating plate assembly 200 may push the floating plate assembly 200 to move in a direction of the liquid surface, such that the floating plate assembly 200 can cover at least a portion of the liquid inlet 121 when the floating plate assembly is in the closed position, to reduce the probability of the garbage in the filter cavity 122 flowing out of the filter cavity 122. Alternatively, when the water surface cleaning robot 1 moves in a direction away from the liquid inlet 121, the water surface cleaning robot 1 and the liquid to be cleaned move relative to each other. In this case, in addition to the buoyancy exerted by the liquid to be cleaned, the floating plate assembly 200 is also subjected to a thrust force exerted thereon by the liquid to be cleaned, such that the floating plate assembly 200 can switch from the open position to the closed position more quickly, thereby preventing the garbage in the filter cavity 122 from flowing out of the filter cavity 122 together with the liquid to be cleaned.

When the water surface cleaning robot 1 moves in the direction of the liquid inlet 121, the water surface cleaning robot 1 and the liquid to be cleaned move relative to each other. The floating plate assembly 200 is subjected to the thrust force exerted thereon by the liquid to be cleaned. When the thrust force exerted by the liquid to be cleaned on the floating plate assembly 200 is greater than the buoyancy exerted by the liquid to be cleaned on the floating plate assembly 200, the floating plate assembly 200 may start to rotate towards the open position, such that the floating plate assembly 200 switches to the open position. In this case, the garbage in the liquid to be cleaned can enter the filter cavity 122 more quickly, to ensure the cleaning velocity of the water surface cleaning robot 1 on the liquid to be cleaned.

In addition, in the water surface cleaning robot 1 according to the embodiments of the present disclosure, the rotation of the floating plate assembly 200 between the open position and the closed position does not require an additional drive structure, and the floating plate assembly 200 can be controlled to be opened or closed merely by changing the moving state of the water surface cleaning robot 1. The water surface cleaning robot 1 has a simpler structure, fewer components, simplified disassembly and assembly steps, lower production costs and weight, and a concise control program, making it conducive to improving the cleaning efficiency and convenient for operation.

In the water surface cleaning robot 1 according to the embodiments of the present disclosure, it is not required to provide an additional drive structure for the floating plate assembly 200. Thus, the water surface cleaning robot 1 has advantages such as a simpler structure, fewer components, and lower production costs and weight.

As shown in FIG. 1 and FIG. 2, the rotation axis of the floating plate assembly 200 is positioned below the liquid surface of the liquid to be cleaned, and the rotation axis may pass through the floating plate assembly 200. Because the rotation axis of the floating plate assembly 200 is positioned below the liquid surface of the liquid to be cleaned, at least a portion of the floating plate assembly 200 may still be positioned below the liquid surface regardless of the position of the floating plate assembly 200. In this way, it can be ensured that the floating plate assembly 200 can effectively shelter the liquid inlet 121.

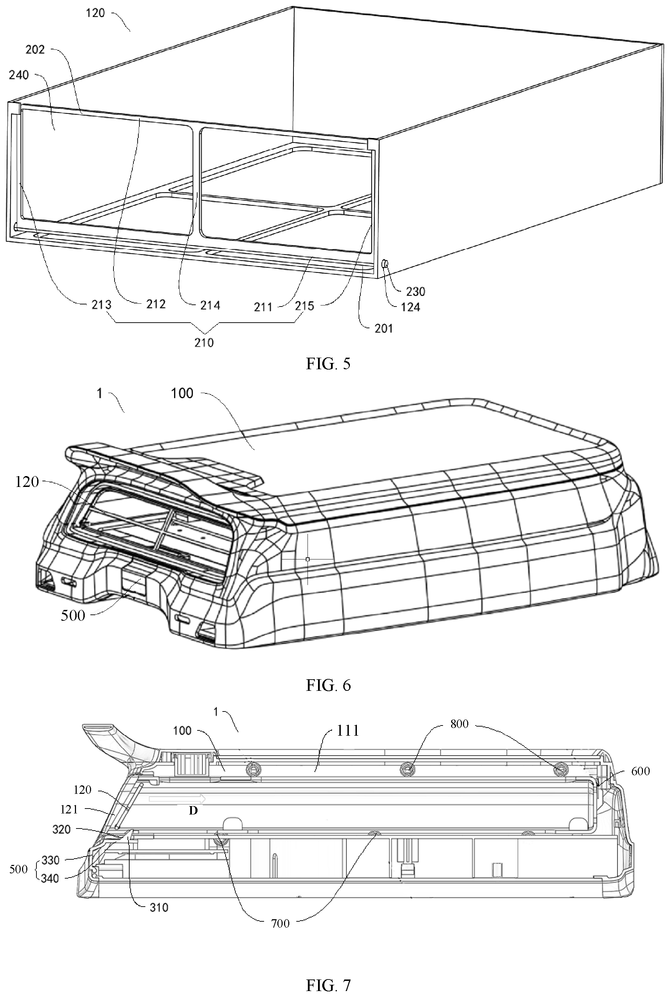

As shown in FIG. 5, the floating plate assembly 200 has a first side 201 and a second side 202, where the first side 201 and the second side 202 are arranged on two opposite sides of the floating plate assembly 200, and the first side 201 is rotatably connected to the housing 100 or a side wall of the filter cavity 122 or the filter device 120. Preferably, the first side 201 is rotatably connected to the housing 100. That is, the rotation axis of the floating plate assembly 200 is arranged on the first side 201, and the arrangement direction of the first side 201 and the second side 202 is perpendicular to the rotation axis of the floating plate assembly 200. When the floating plate assembly 200 switches from the open position to the closed position, the second side 202 rotates upward around the rotation axis of the floating plate assembly 200. When the floating plate assembly 200 switches from the closed position to the open position, the second side 202 rotates downward around the rotation axis of the floating plate assembly 200.

Because the density of the floating plate assembly 200 is less than that of the liquid to be cleaned, when the water surface cleaning robot 1 moves in the direction away from the liquid inlet 121, or when the water surface cleaning robot 1 is motionless, the buoyancy exerted by the liquid to be cleaned on the floating plate assembly 200 may naturally push the floating plate assembly 200 to move upward. Compared to arranging the rotation axis of the floating plate assembly 200 between the first side 201 and the second side 202, the connection of the first side 201 to the housing 100 reduces the displacement of the first side 201 relative to the housing 100. Further, the second side 202 rotates upward around the rotation axis of the floating plate assembly 200, which facilitates the rotation of the floating plate assembly 200 between the open position and the closed position.

As shown in FIG. 1 and FIG. 2, the water surface cleaning robot 1 moves in the horizontal direction, and the housing 100 has the first side face 101 and the second side face 102 arranged opposite to each other in the moving direction of the water surface cleaning robot 1. The liquid inlet 121 is arranged on the first side face 101, and the first side 201 is positioned below the second side 202 when the floating plate assembly 200 is in the closed position. For example, the water surface cleaning robot 1 may float on the liquid surface to achieve cleaning of the liquid surface, and the water surface cleaning robot 1 may also sink in the liquid to achieve overall cleaning of the liquid.

When the water surface cleaning robot 1 moves in the direction of the first side face 101, the floating plate assembly 200 rotates to the open position under the thrust force of the liquid to be cleaned. At this moment, the floating plate assembly 200 may be in a horizontal state, the liquid inlet 121 is open, and the garbage can enter the filter cavity 122. When the water surface cleaning robot 1 is motionless, the floating plate assembly 200 rotates to the closed position under the action of the buoyancy of the liquid to be cleaned. At this moment, the floating plate assembly 200 may be in a vertical state, thereby preventing the garbage from moving out of the filter cavity 122. When the water surface cleaning robot 1 moves in the direction of the second side face 102, the floating plate assembly 200 rotates to the closed position under the action of the buoyancy and the thrust force of the liquid to be cleaned. At this moment, the floating plate assembly 200 may be in the vertical state, thereby preventing the garbage from moving out of the filter cavity 122.

As shown in FIG. 1 and FIG. 2, a portion of the liquid inlet 121 is positioned above the liquid surface, and another portion of the liquid inlet 121 is positioned below the liquid surface. That is, the lower edge of the liquid inlet 121 is lower than the liquid surface of the liquid to be cleaned, and the upper edge of the liquid inlet 121 is higher than the liquid surface of the liquid to be cleaned. The water surface cleaning robot 1 floats on the liquid surface, for example, the water surface cleaning robot 1 is provided with a buoyancy device, such that the water surface cleaning robot 1 mainly cleans the liquid surface. The garbage in the liquid to be cleaned is concentrated on the liquid surface. Thus, after the garbage is cleaned from the liquid surface, the degree of cleanliness of the liquid to be cleaned is greatly improved. In this way, the cleaning efficiency of the water surface cleaning robot 1 is enhanced.

As shown in FIG. 1 and FIG. 2, the floating plate assembly 200 may be made of a material whose density is less than the density of the liquid to be cleaned. For example, when the water surface cleaning robot 1 is used in a swimming pool, the floating plate assembly 200 may be made of a material whose density is less than the density of the liquid in the swimming pool. When the water surface cleaning robot 1 is used in a river, the floating plate assembly 200 may be made of a material whose density is less than the density of the liquid in the river. The floating plate assembly 200 may also be provided with a cavity, such that the density of the floating plate assembly 200 is less than that of the liquid to be cleaned. In this way, the floating plate assembly 200 allows for a greater variety of construction configurations, which is conducive to applying the water surface cleaning robot 1 to different usage scenarios.

As shown in FIG. 1 and FIG. 2, the housing 100 is provided with a limit block 123. When the floating plate assembly 200 is in the closed position, the floating plate assembly 200 stops at the limit block 123 to limit the rotation stroke of the floating plate assembly 200.

For example, there may be at least two limit blocks 123, which are respectively arranged on two opposite sides of the floating plate assembly 200 in an extension direction of the rotation axis of the floating plate assembly 200, to evenly distribute the force on the floating plate assembly 200. The limit blocks 123 stop at the second side 202, and the limit blocks 123 are positioned above the liquid surface, which has a better limiting effect on the floating plate assembly 200. When the floating plate assembly 200 is in the closed position, the limit blocks 123 are positioned on the upper side of the liquid inlet 121, that is, the distances between the limit blocks 123 and the liquid surface are farther, which does not easily affect the garbage on the liquid surface from entering the filter cavity 122, thereby ensuring the efficiency of the water surface cleaning robot 1 in cleaning the garbage on the liquid surface.

When the water surface cleaning robot 1 is moving in the direction of the liquid inlet 121, the liquid to be cleaned continuously enters the filter cavity 122 through the liquid inlet 121, and the floating plate assembly 200 is pushed from the closed position to the open position, and the floating plate assembly 200 gradually rotates into the filter cavity 122. When the floating plate assembly 200 moves to the open position, it is stopped by the inner wall of the filter cavity 122, so there is no need to provide an additional stop structure to stop the floating plate assembly 200 in the open position.

When the water surface cleaning robot 1 is moving in the direction away from the liquid inlet 121 or when the water surface cleaning robot 1 is in a quiescent state, the liquid to be cleaned exerts a buoyancy on the floating plate assembly 200, such that the floating plate assembly 200 is pushed from the open position to the closed position, and the floating plate assembly 200 gradually rotates outwardly from the filter cavity 122. By providing the limit block 123 that may be positioned on a side of the floating plate assembly 200 facing away from the filter cavity 122, the limit block 123 can limit the floating plate assembly 200 to the closed position, which prevents the limit block 123 from excessively rotating outwardly from the filter cavity 122, thereby maximally sheltering the liquid inlet 121 by the floating plate assembly 200. When the floating plate assembly 200 is in the closed position, it has better effects on sheltering the liquid inlet 121, thereby reducing the probability of objects in the filter cavity 122 moving out of the liquid inlet 121.

As shown in FIG. 1 and FIG. 2, the floating plate assembly 200 includes a floating plate skeleton 210 and a first filter mesh. The floating plate skeleton 210 is rotatably installed on the housing 100. The density of the floating plate skeleton 210 is less than that of the liquid to be cleaned. The first filter mesh is arranged in the floating plate skeleton 210. When the floating plate assembly 200 is in the closed position, at least a portion of the liquid inlet 121 is covered by the first filter mesh.

The floating plate skeleton 210 is made of a material whose density is less than the density of water, or the floating plate assembly 200 is provided with a cavity, such that the density of the floating plate assembly 200 is less than that of the liquid to be cleaned. Alternatively, the floating plate skeleton 210 is made of a material whose density is less than the density of water, and the floating plate assembly 200 is provided with the cavity.

By arranging the first filter mesh, not only the garbage in the filter cavity 122 can be prevented from flowing out when the floating plate assembly 200 is in the closed position, but also the degree of sealing of the filter cavity 122 can be reduced when the floating plate assembly 200 is in the closed position, thereby increasing exchange efficiency between the filter cavity 122 and the external liquid to be cleaned, and reducing the weight of the floating plate assembly 200 and the costs.

As shown in FIG. 5, the floating plate skeleton 210 has a plurality of through holes 240, a plurality of first filter meshes are provided, and the plurality of first filter meshes are arranged in the plurality of through holes 240 in one-to-one correspondences. In this way, the plurality of first filter meshes are separated, the area of each of the first filter meshes can be reduced, thereby reducing the probability of damage to the first filter meshes and improving structural strength of the floating plate skeleton 210.

As shown in FIG. 5, the arrangement direction of the plurality of through holes 240 is perpendicular to the moving direction of the water surface cleaning robot 1, which avoids stacking of the plurality of first filter meshes along the moving direction of the water surface cleaning robot 1, making it beneficial for increasing the area of the plurality of first filter meshes covering the liquid inlet 121.

For example, the floating plate skeleton 210 includes a first transverse beam 211, a second transverse beam 212, a first vertical beam 213, a second vertical beam 214, and a third vertical beam 215.

The first transverse beam 211 extends in the horizontal direction and is lower than the liquid surface of the liquid to be cleaned, and the second transverse beam 212 extends in the horizontal direction and is higher than the liquid surface of the liquid to be cleaned. The first vertical beam 213, the second vertical beam 214, and the third vertical beam 215 all extend in the vertical direction and are spaced apart in the horizontal direction. The first transverse beam 211 is connected to the first vertical beam 213, the second vertical beam 214, and the third vertical beam 215, respectively. The second transverse beam 212 is connected to the first vertical beam 213, the second vertical beam 214, and the third vertical beam 215, respectively. One of the first filter meshes is arranged between the first vertical beam 213 and the second vertical beam 214, and the other one of the first filter meshes is arranged between the second vertical beam 214 and the third vertical beam 215.

By arranging the first transverse beam 211, the second transverse beam 212, the first vertical beam 213, the second vertical beam 214, and the third vertical beam 215, the floating plate skeleton 210 roughly forms a frame shaped like a Chinese character " 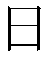 " , making the structure of the floating plate skeleton 210 more stable. Moreover, providing the plurality of first filter meshes can reduce the area of each first filter mesh, thereby reducing the probability of damage to the first filter meshes.

As shown in FIG. 1 and FIG. 2, the filter device 120 is arranged in the receiving cavity 111 in a retractable manner. The floating plate assembly 200 is rotatably arranged on the outer shell 110 or the filter device 120.

After the water surface cleaning robot 1 cleans the liquid surface, the filter device 120 may be disassembled from the receiving cavity 111 to dump the garbage in the filter cavity 122 of the filter device 120, and then the filter device 120 can be installed in the receiving cavity 111. The water surface cleaning robot 1 is reusable with improved effectiveness, and there is no need to lift the water surface cleaning robot 1 as a whole to dump the garbage, thereby improving convenience of dumping the garbage for the water surface cleaning robot 1.

As shown in FIG. 5, one of the floating plate assembly 200 and the filter device 120 is provided with a rotating shaft 230, and the other one of the floating plate assembly 200 and the filter device 120 is provided with a shaft hole 124, where the rotating shaft 230 is rotatably engaged with the shaft hole 124. Compared to installing the floating plate assembly 200 on the outer shell 110, by installing the floating plate assembly 200 on the filter device 120, when the filter device 120 is installed in the receiving cavity 111 and when the filter device 120 is disassembled from the receiving cavity 111, the floating plate assembly 200 does not interfere with the filter device 120, making it more convenient to disassemble and assemble the filter device 120.

As shown in FIGS. 1 to 4, the filter device 120 and/or the housing 100 are provided with an inlet, and the housing 100 is provided with a liquid channel 112. The pump body is arranged inside the liquid channel 112, where the liquid channel 112 is connected to the inlet and the liquid outlet respectively. After being filtered by the filter device 120, the liquid to be cleaned enters the liquid channel 112 through the inlet, and then drains out through the liquid outlet.

At least two inlets are provided, and are arranged on an inner wall of the housing 100. Under the action of the suction assembly, the filtered liquid enters the liquid channel 112 through one inlet of the inlets and drains out through the outlet corresponding to this inlet.

The pump body includes a motor and an impeller 140, where the rotation axis of the impeller 140 extends along the moving direction of the water surface cleaning robot 1. Under the action of the motor, the impeller rotates in a first direction or a second direction, where the first direction is opposite to the second direction. Different rotation directions allow the liquid to drain out through different outlets.

The housing 100 is provided with the liquid inlet 121, the filter cavity 122, and the liquid channel 112 that are sequentially communicated. The water surface cleaning robot 1 moves in the horizontal direction, and the housing 100 has the first side face 101 and the second side face 102 arranged opposite to each other in the moving direction of the water surface cleaning robot 1. The first side face 101 is provided with the liquid inlet 121 and the front drainage port 180, and the second side face 102 is provided with the rear drainage port 190, where the liquid channel 112 is communicated with the front drainage port 180 and the rear drainage port 190, respectively. The pump body is arranged inside the liquid channel 112.

As shown in FIG. 1, FIG. 2, and FIG. 4, at least two different inlets correspond to different liquid channels. One of the liquid channels is close to a third side face of the housing 100, and another one of the liquid channels is close to a fourth side face of the housing 100, where the third side face and the fourth side face are arranged opposite to each other and are perpendicular to the first side face and the second side face. Different liquid channels correspond to different outlets. Under the action of the suction assembly, the liquid enters different liquid channels via different inlets and drains out through different outlets, such that the water surface cleaning robot moves forward or backward or makes a turn.

Based on the first side face 101 and the second side face 102 serving as two opposite side faces in a front-rear direction of the water surface cleaning robot 1, the third side face and the fourth side face may be two opposite side faces in a left-right direction of the housing 100. In this way, different liquid channels 112 have different inlets and outlets, and different liquid channels 112 are arranged on two opposite sides of the housing 100. By controlling the liquid to enter different flow channels, the suction assembly may control the water surface cleaning robot 1 to move forward or backward or make a turn.

For example, the water surface cleaning robot 1 has a forward moving mode and a backward moving mode, and the liquid outlet may include the front drainage port 180 and the rear drainage port 190. When the water surface cleaning robot 1 is in the forward moving mode, the impeller 140 rotates in the first direction, such that the pump body guides the liquid in the liquid channel 112 to the rear drainage port 190. When the water surface cleaning robot 1 is in the backward moving mode, the impeller 140 rotates in the second direction, such that the pump body guides the liquid in the liquid channel 112 to the front drainage port 180. By changing the direction of rotation of the impeller 140, the flow direction of the liquid in the liquid channel 112 can be changed. That is, the liquid in the liquid channel 112 is guided to the front drainage port 180 or the rear drainage port 190 without the need for a structure for opening or closing the front drainage port 180 or the rear drainage port 190. Thus, the structure is simpler, the number of components is reduced, and the usage costs are lowered. In this way, the pump body not only can guide the liquid to be cleaned into the filter cavity 122, but also can adjust the moving direction of the water surface cleaning robot 1. The pump body can achieve a variety of functions, and reduce the number of components. The water surface cleaning robot 1 has a simple structure, and thus the cost and weight thereof can be correspondingly reduced.

A side wall of the liquid channel 112 facing towards the filter cavity 122 in the horizontal direction has an oblique segment 113, where the oblique segment 113 is obliquely arranged with respect to a rotation shaft of the impeller 140, and the rotation shaft of the impeller 140 passes through the oblique segment 113. In this way, there is no need to additionally provide a fixing structure, and the fixation of the impeller 140 can be achieved through the side wall of the liquid channel 112. Thus, the number of the components is reduced, and the structure is simpler.

Specifically, the oblique segment 113 may be designed as an arc shape that protrudes horizontally in a direction closer to the filter cavity 122, to increase volume of the liquid channel 112 and reduce flow resistance of the liquid, resulting in better guidance effect.

In addition, the inlet includes a front water inlet 150 and a rear water inlet 160, where the front water inlet 150 is positioned between the impeller 140 and the first side face 101, and the rear water inlet 160 is positioned between the impeller 140 and the second side face 102.

The filter cavity 122 is communicated with the liquid channel 112 selectively through the front water inlet 150 or the rear water inlet 160, and both the front water inlet 150 and the rear water inlet 160 are communicated with the liquid channel 112.

When the water surface cleaning robot 1 is in the forward moving mode, the front water inlet 150 is communicated with the filter cavity 122, and the rear water inlet 160 is disconnected from the filter cavity 122. When the water surface cleaning robot 1 is in the backward moving mode, the front water inlet 150 is disconnected from the filter cavity 122, and the rear water inlet 160 is communicated with the filter cavity 122.

That is, when the water surface cleaning robot 1 is in the forward moving mode, the liquid to be cleaned in the filter cavity 122 flows into the liquid channel 112 through the front water inlet 150, and then is guided by the impeller 140 to drain out of the housing 100 through the rear drainage port 190. Because the front water inlet 150 is positioned on a front side of the impeller 140 and the rear drainage port 190 is positioned on a rear side of the impeller 140, the liquid in the front side of the impeller 140 is continuously guided to the rear of the impeller 140 when the impeller 140 rotates. The liquid flowing through the front water inlet 150 can be timely replenished to the front side of the impeller 140, such that the liquid flow in the liquid channel 112 is smoother, which accelerates the flow velocity of the liquid in the liquid channel 112 and ensures the forward velocity of the water surface cleaning robot 1.

When the water surface cleaning robot 1 is in the backward moving mode, the liquid to be cleaned in the filter cavity 122 flows into the liquid channel 112 through the rear water inlet 160, and then is guided by the impeller 140 to drain out of the housing 100 through the front drainage port 180. Because the rear water inlet 160 is positioned on the rear side of the impeller 140 and the front drainage port 180 is positioned on the front side of the impeller 140, the liquid in the rear side of the impeller 140 is continuously guided to the front of the impeller 140. The liquid flowing through the rear water inlet 160 can be timely replenished to the rear side of the impeller 140, such that the liquid flow in the liquid channel 112 is smoother, which accelerates the flow velocity of the liquid in the liquid channel 112 and ensures the backward velocity of the water surface cleaning robot 1.

A side of the liquid channel 112 facing towards the filter cavity 122 is provided with a convex front protrusion 116 and a convex rear protrusion 117, where the front protrusion 116 is communicated with the front water inlet 150, and the rear protrusion 117 is communicated with the rear water inlet 160 to increase the volume of the liquid channel 112. The oblique segment 113 is constructed as a portion of the front protrusion 116 and is used to fix the impeller 140.

By adjusting the rotation direction of the impeller 140, the flow direction of the liquid inside the housing 100 can be adjusted. When the impeller 140 rotates in the first direction, the liquid inside the housing 100 flows out through the rear drainage port 190, which provides a forward reaction force to the water surface cleaning robot 1, to push the water surface cleaning robot 1 to move forward. When the impeller 140 rotates in the second direction, the liquid inside the housing 100 flows out through the front drainage port 180, which provides a backward reaction force to the water surface cleaning robot 1, to push the water surface cleaning robot 1 to move backward.

In this way, the pump body not only can guide the liquid to be cleaned into the filter cavity 122, but also can adjust the moving direction of the water surface cleaning robot 1. The pump body can achieve a variety of functions, and reduce the number of the components. The water surface cleaning robot 1 has a simple structure, and thus the cost and weight thereof can be correspondingly reduced.

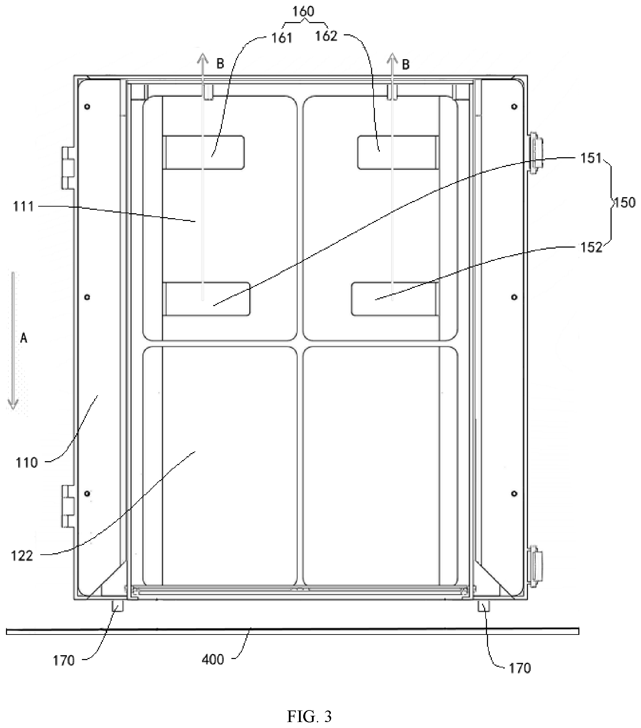

As shown in FIG. 3 and FIG. 4, a distance between the front water inlet 150 and the first side face 101 is greater than a distance between the front water inlet 150 and the second side face 102, and a distance between the rear water inlet 160 and the first side face 101 is greater than a distance between the rear water inlet 160 and the second side face 102.

That is, both the front water inlet 150 and the rear water inlet 160 are farther away from the liquid inlet 121. Therefore, the liquid to be cleaned entering the filter cavity 122 through the liquid inlet 121 has a longer flow path in the filter cavity 122, thereby preventing the garbage in the liquid to be cleaned from being accumulated near the liquid inlet 121, which may adversely affect subsequent flow of the liquid to be cleaned into the filter cavity 122. That is, the space of the filter cavity 122 is fully utilized to store the garbage.

As shown in FIG. 3 and FIG. 4, the housing 100 is provided with a plurality of liquid channels 112 that are spaced apart. The arrangement direction of the plurality of liquid channels 112, the moving direction of the housing 100, and the vertical direction are perpendicular to each other. The plurality of liquid channels 112 include a first liquid channel 114 and a second liquid channel 115, which are arranged on two opposite sides of the filter cavity 122, respectively.

By arranging the plurality of liquid channels 112 in which a plurality of pump bodies may be provided, the plurality of pump bodies may operate simultaneously to provide a greater driving force to the water surface cleaning robot 1, thereby increasing the movement speed of the water surface cleaning robot 1 when it is in the forward moving state or backward moving state.

In addition, the plurality of liquid channels 112 are arranged in the horizontal direction, which can reduce the size of the housing 100 in the vertical direction, thereby reducing the size of the water surface cleaning robot 1 in the vertical direction, and increasing the size of the housing 100 in the horizontal direction, i.e., increasing the size of the liquid inlet 121 in the horizontal direction. This is conducive to increasing the velocity of the water surface cleaning robot 1 in cleaning the garbage on the liquid surface.

As shown in FIG. 3 and FIG. 4, the water surface cleaning robot 1 has a first steering mode and a second steering mode. When the water surface cleaning robot 1 is in the first steering mode, the impeller 140 in the first liquid channel 114 rotates in the first direction, and the impeller 140 in the second liquid channel 115 rotates in the second direction. When the water surface cleaning robot 1 is in the second steering mode, the impeller 140 in the first liquid channel 114 rotates in the second direction, and the impeller 140 in the second liquid channel 115 rotates in the first direction.

It should be noted that the impeller 140 in the first liquid channel 114 may be a forward impeller, and the impeller 140 in the second liquid channel 115 may be a reverse impeller. Alternatively, the impeller 140 in the first liquid channel 114 may be a reverse impeller, and the impeller 140 in the second liquid channel 115 may be a forward impeller. Therefore, the first direction of the impeller 140 in the first liquid channel 114 and the first direction of the impeller 140 in the second liquid channel 115 may be opposite to each other, and the second direction of the impeller 140 in the first liquid channel 114 and the second direction of the impeller 140 in the second liquid channel 115 may be opposite to each other.

For example, when viewed in a direction from the first side face 101 to the second side face 102, a direction in which the impeller 140 in the first liquid channel 114 rotates clockwise is the first direction thereof, a direction in which the impeller 140 in the first liquid channel 114 rotates counterclockwise is the second direction thereof, a direction in which the impeller 140 in the second liquid channel 115 rotates counterclockwise is the first direction thereof, and a direction in which the impeller 140 in the second liquid channel 115 rotates clockwise is the second direction thereof.

Alternatively, when viewed in a direction from the first side face 101 to the second side face 102, a direction in which the impeller 140 in the first liquid channel 114 rotates counterclockwise is the first direction thereof, a direction in which the impeller 140 in the first liquid channel 114 rotates clockwise is the second direction thereof, a direction in which the impeller 140 in the second liquid channel 115 rotates clockwise is the first direction thereof, and a direction in which the impeller 140 in the second liquid channel 115 rotates counterclockwise is the second direction thereof.

In this way, the motion force for the water surface cleaning robot 1 is more balanced, thereby avoiding problems such as deflection of the water surface cleaning robot 1.

Specifically, when the water surface cleaning robot 1 is in the first steering mode, the impeller 140 in the first liquid channel 114 rotates in the first direction, and the liquid in the first liquid channel 114 drains out through the rear drainage port 190. That is, a side of the water surface cleaning robot 1 close to the first liquid channel 114 moves forward. The impeller 140 in the second liquid channel 115 rotates in the second direction, and the liquid in the second liquid channel 115 drains out through the front drainage port 180. That is, a side of the water surface cleaning robot 1 close to the second liquid channel 115 moves backward. In this way, the water surface cleaning robot 1 can make a turn.

When the water surface cleaning robot 1 is in the second steering mode, the impeller 140 in the second liquid channel 115 rotates in the second direction, and the liquid in the second liquid channel 115 drains out through the rear drainage port 190. That is, a side of the water surface cleaning robot 1 close to the second liquid channel 115 moves forward. The impeller 140 in the first liquid channel 114 rotates in the first direction, and the liquid in the first liquid channel 114 drains out through the front drainage port 180. That is, a side of the water surface cleaning robot 1 close to the first liquid channel 114 moves backward. In this way, the water surface cleaning robot 1 can make a turn.

The water surface cleaning robot 1 may turn left (or right) when it is in the first steering mode, and the water surface cleaning robot 1 may turn right (or left) when it is in the second steering mode.

In this way, the water surface cleaning robot 1 not only can move in a straight line (i.e. move forward or backward), but also can make a turn, and there is no need for a user to manually change the moving direction of the water surface cleaning robot 1. Thus, the water surface cleaning robot 1 has higher automation level, which is conducive to expanding the cleaned region of the liquid surface and improving the cleaning effect.

As shown in FIG. 3 and FIG. 4, the front water inlet 150 includes a first front water inlet 151 and a second front water inlet 152, where the first front water inlet 151 and a first rear water inlet 161 are both communicated with the first liquid channel 114. The rear water inlet 160 includes the first rear water inlet 161 and a second rear water inlet 162, where the second front water inlet 152 and the second rear water inlet 162 are both communicated with the second liquid channel 115.

When the water surface cleaning robot 1 is in the first steering mode, the first front water inlet 151 is communicated with the filter cavity 122, the first rear water inlet 161 is disconnected from the filter cavity 122, the second front water inlet 152 is disconnected from the filter cavity 122, and the second rear water inlet 162 is communicated with the filter cavity 122.

When the water surface cleaning robot 1 is in the second steering mode, the first front water inlet 151 is disconnected from the filter cavity 122, the first rear water inlet 161 is communicated with the filter cavity 122, the second front water inlet 152 is communicated with the filter cavity 122, and the second rear water inlet 162 is disconnected from the filter cavity 122.

That is, the first front water inlet 151 is communicated with the first liquid channel 114 but is not communicated with the second liquid channel 115, and the first rear water inlet 161 is communicated with the first liquid channel 114 but is not communicated with the second liquid channel 115. The second front water inlet 152 is communicated with the second liquid channel 115 but is not communicated with the first liquid channel 114, and the second rear water inlet 162 is communicated with the second liquid channel 115 but is not communicated with the first liquid channel 114.

For example, the water surface cleaning robot 1 is provided with a baffle, wherein the baffle is rotatably connected to the housing 100 and is rotatable between an open position and a closed position. When rotating from the closed position to the open position, the baffle gradually moves into the liquid channel. That is, the baffle gradually moves away from the filter cavity 122. When rotating from the open position to the closed position, the baffle gradually moves in a direction towards the filter cavity 122 until the baffle is stopped by the filter device 120 or the housing 100, thereby preventing the baffle from entering the filter cavity 122.

The baffle is provided at each of the front water inlet 150 and the rear water inlet 160.

When the water surface cleaning robot 1 is in the forward moving mode, guided by the impeller 140, the liquid in the liquid channel 112 drains out of the housing 100 through the rear drainage port 190, so pressure inside the liquid channel 112 drops at the front water inlet 150, and the baffle at the front water inlet 150 moves into the liquid channel 112 under the pressure of the liquid in the filter cavity 122. The filter cavity 122 is communicated with the liquid channel 112 through the front water inlet 150, the pressure inside the liquid channel 112 rises at the rear water inlet 160, such that the baffle at the rear water inlet 160 is fixed in the closed position under the pressure of the liquid in the liquid channel 112 to prevent the filter cavity 122 from being communicated with the liquid channel 112 through the rear water inlet 160.

When the water surface cleaning robot 1 is in the backward moving mode, guided by the impeller 140, the liquid in the liquid channel 112 drains out of the housing 100 through the front drainage port 180, so the pressure inside the liquid channel 112 drops at the rear water inlet 160, and the baffle at the rear water inlet 160 moves into the liquid channel 112 under the pressure of the liquid in the filter cavity 122. The filter cavity 122 is communicated with the liquid channel 112 through the rear water inlet 160, the pressure inside the liquid channel 112 rises at the front water inlet 150, such that the baffle at the front water inlet 150 is fixed in the closed position under the pressure of the liquid in the liquid channel 112 to prevent the filter cavity 122 from being communicated with the liquid channel 112 through the front water inlet 150.

When the water surface cleaning robot 1 is in the first steering mode, the liquid in the first liquid channel 114 drains out of the housing 100 through the rear drainage port 190, so the pressure inside the liquid channel 112 drops at the first front water inlet 151, and the baffle at the first front water inlet 151 moves into the first liquid channel 114 under the pressure of the liquid in the filter cavity 122. The filter cavity 122 is communicated with the first liquid channel 114 through the first front water inlet 151, and the pressure inside the liquid channel 112 rises at the first rear water inlet 161. The baffle at the first rear water inlet 161 is fixed in the closed position under the pressure of the liquid in the first liquid channel 114 to prevent the filter cavity 122 from being communicated with the first liquid channel 114 through the first rear water inlet 161. The liquid in the second liquid channel 115 drains out of the housing 100 through the front drainage port 180, so the pressure inside the liquid channel 112 drops at the second rear water inlet 162, and the baffle at the second rear water inlet 162 moves into the second liquid channel 115 under the pressure of the liquid in the filter cavity 122. The filter cavity 122 is communicated with the second liquid channel 115 through the second rear water inlet 162, and the pressure inside the liquid channel 112 rises at the second front water inlet 152. The baffle at the second front water inlet 152 is fixed in the closed position under the pressure of the liquid in the second liquid channel 115 to prevent the filter cavity 122 from being communicated with the second liquid channel 115 through the second front water inlet 152.

When the water surface cleaning robot 1 is in the second steering mode, the liquid in the first liquid channel 114 drains out of the housing 100 through the front drainage port 180, so the pressure inside the liquid channel 112 drops at the first rear water inlet 161, and the baffle at the first rear water inlet 161 moves into the first liquid channel 114 under the pressure of the liquid in the filter cavity 122. The filter cavity 122 is communicated with the first liquid channel 114 through the first rear water inlet 161, and the pressure inside the liquid channel 112 rises at the first front water inlet 151. The baffle at the first front water inlet 151 is fixed in the closed position under the pressure of the liquid in the first liquid channel 114 to prevent the filter cavity 122 from being communicated with the first liquid channel 114 through the first front water inlet 151. The liquid in the second liquid channel 115 drains out of the housing 100 through the rear drainage port 190, so the pressure inside the liquid channel 112 drops at the second front water inlet 152, and the baffle at the second front water inlet 152 moves into the second liquid channel 115 under the pressure of the liquid in the filter cavity 122. The filter cavity 122 is communicated with the second liquid channel 115 through the second front water inlet 152, and the pressure inside the liquid channel 112 rises at the second rear water inlet 162. The baffle at the second rear water inlet 162 is fixed in the closed position under the pressure of the liquid in the second liquid channel 115 to prevent the filter cavity 122 from being communicated with the second liquid channel 115 through the second rear water inlet 162.

In this way, the control mode of the water surface cleaning robot 1 is clearer, the liquid flow in the first liquid channel 114 is smoother, the liquid flow in the second liquid channel 115 is smoother, and quantity of the liquid in both the first liquid channel 114 and the second liquid channel 115 is more sufficient.

As shown in FIG. 3 and FIG. 4, at least one of the outer shell 110 and the filter device 120 is provided with a second filter mesh, which is arranged between the filter cavity 122 and the liquid channel 112 to filter the liquid flowing from the filter cavity 122 to the liquid channel 112.

When the water surface cleaning robot 1 is moving forward, the liquid to be cleaned can continuously enter the filter cavity 122 through the liquid inlet 121. The liquid to be cleaned in the filter cavity 122 can flow to the liquid channel 112 through the water inlet, and finally drain out of the outer shell 110 via the front drainage port 180 or the rear drainage port 190 through the liquid channel 112. The second filter mesh is positioned between the filter cavity 122 and the water inlet to prevent the liquid in the filter cavity 122 from flowing into the water inlet, thereby preventing the liquid channel 112 and the water inlet from being blocked. In this way, it is ensured smoothness of discharge of the liquid to be cleaned in the filter cavity 122, and the liquid to be cleaned in the filter cavity 122 is prevented from backward flowing out through the liquid inlet 121, thereby avoiding overflow of the garbage.

The first front water inlet 151, the second front water inlet 152, the first rear water inlet 161, and the second rear water inlet 162 are positioned between the first liquid channel 114 and the second liquid channel 115. In this way, the front drainage port 180 and the rear drainage port 190 communicated with the first liquid channel 114 are closer to one side in a width direction of the water surface cleaning robot 1, and the front drainage port 180 and the rear drainage port 190 communicated with the second liquid channel 115 are closer to the other side in the width direction of the water surface cleaning robot 1. The water surface cleaning robot 1 can make a turn fast, which is beneficial for the water surface cleaning robot 1 to adjust its own moving direction.

Specifically, the first front water inlet 151 and the first rear water inlet 161 may be spaced apart along the extension direction of the water surface cleaning robot 1, and the second front water inlet 152 and the second rear water inlet 162 may be spaced apart along the extension direction of the water surface cleaning robot 1. The first front water inlet 151 is closer to the first liquid channel 114 when compared with the second front water inlet 152, and the first rear water inlet 161 is closer to the first liquid channel 114 when compared with the second rear water inlet 162.

In this way, both the first front water inlet 151 and the first rear water inlet 161 are closer to the first liquid channel 114, which shortens the liquid flow path between the first front water inlet 151 and the first liquid channel 114, and shortens the liquid flow path between the first rear water inlet 161 and the first liquid channel 114. Thus, the structure of the water surface cleaning robot 1 is simpler.

Both the second front water inlet 152 and the second rear water inlet 162 are closer to the second liquid channel 115, which shortens the liquid flow path between the second front water inlet 152 and the second liquid channel 115, and shortens the liquid flow path between the second rear water inlet 162 and the second liquid channel 115. Thus, the structure of the water surface cleaning robot 1 is simpler.

The liquid channel 112 is positioned below the filter cavity 122. In this way, guided by the impeller 140, the liquid in the filter cavity 122 flows downward into the liquid channel 112 without overcoming gravity, and the liquid in the filter cavity 122 more easily flows into the liquid channel 112 under the action of the gravity, thereby reducing energy efficiency of the water surface cleaning robot 1 and extending endurance time of the water surface cleaning robot 1.

As shown in FIGS. 3 to 5, the housing 100 includes an outer shell 110. The liquid channel 112 and the water inlet are arranged in the outer shell 110, the pump body is connected to the outer shell 110, the filter device 120 is detachably arranged on the outer shell 110, and the filter cavity 122 is arranged in the filter device 120.

As shown in FIG. 3 and FIG. 4, at least one of the outer shell 110 and the filter device 120 is provided with a second filter mesh, which is arranged between the filter cavity 122 and the liquid channel 112 to filter the liquid flowing from the filter cavity 122 to the liquid channel 112.

When the water surface cleaning robot 1 is moving forward, the liquid to be cleaned can continuously enter the filter cavity 122 through the liquid inlet 121. The liquid to be cleaned in the filter cavity 122 can flow to the liquid channel 112 through the water inlet, and finally drain out of the outer shell 110 via the front drainage port 180 or the rear drainage port 190 through the liquid channel 112. The second filter mesh is positioned between the filter cavity 122 and the water inlet to prevent the liquid in the filter cavity 122 from flowing into the water inlet, thereby preventing the liquid channel 112 and the water inlet from being blocked. In this way, it is ensured smoothness of discharge of the liquid to be cleaned in the filter cavity 122, and the liquid to be cleaned in the filter cavity 122 is prevented from backward flowing out through the liquid inlet 121, thereby avoiding overflow of the garbage.

In some embodiments, as shown in FIGS. 6 to 8, the water surface cleaning robot 1 also includes a limiting component 500. The housing 100 is provided with a receiving cavity 111, and the filter device 120 is movably disposed in the receiving cavity 111. The limiting component 500 is arranged on the housing 100 and is switchable between a limiting state and a separated state, The limiting component 500 abuts against the filter device 120 when in the limiting state, to fix the relative position between the housing 100 and the filter device 120. The limiting component 500 is separated from the filter device 120 when in the separated state, and the filter device 120 is movable relative to the housing 100.

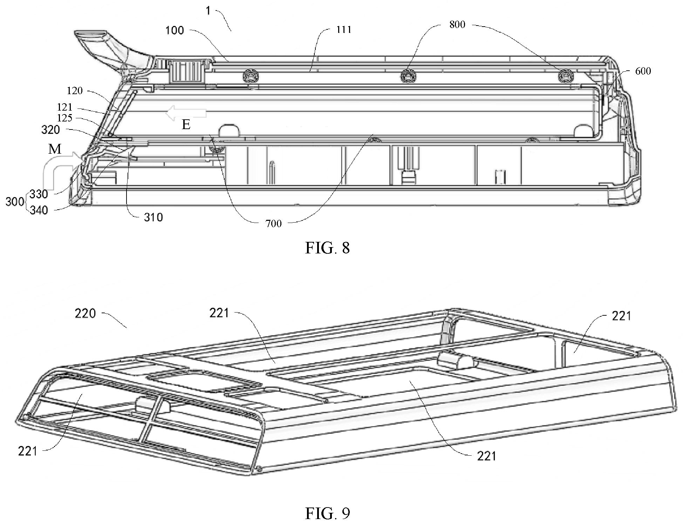

It should be noted that the direction indicated by Arrow D in FIG. 7 is the moving direction of the filter device 120 when it is pushed into the housing 100, and the direction indicated by Arrow E in FIG. 8 is the moving direction of the filter device 120 when it is pulled out from the housing 100.

For example, the limiting component 500 may be a button, and in this case the switchover between the limiting state and the separated state of the limiting component 500 may be manually operated by the user. The direction indicated by Arrow M in FIG. 8 is the moving direction of the limiting component 500 when it is pressed. Alternatively, the limiting component 500 may be an electrically driven structure, and in this case the switchover between the limiting state and the separated state of the limiting component 500 may be controlled through a controller, a handle, or a touch button, etc.

For example, the water surface cleaning robot 1 is provided with a baffle, wherein the baffle is rotatably connected to the housing 100 and is rotatable between the open position and the closed position. During the rotation of the baffle from the closed position to the open position, the baffle gradually moves away from the filter device 120, and the space inside the filter device 120 is communicated with the water outlet. During the rotation of the baffle from the open position to the closed position, the baffle gradually moves in a direction closer to the filter device 120 until the baffle is stopped by the filter device 120 or the housing 100, to prevent the space inside the filter device 120 from being communicated with the water outlet.

The water surface cleaning robot 1 of this embodiment is provided with the receiving cavity 111 on the housing 100, and the filter device 120 is movably disposed in the receiving cavity 111. When the filter device 120 is placed in the receiving cavity 111, the liquid in the swimming pool can continuously enter the filter device 120 through the movement of the water surface cleaning robot 1, the garbage can be stored in the filter device 120, and the filtered liquid flows back to the swimming pool from the filter device 120, thereby achieving the cleaning of the swimming pool.

In addition, the limiting component 500 is switchable between the limiting state and the separated state. The limiting component 500 abuts against the filter device 120 when in the limiting state, to fix the relative position between the housing 100 and the filter device 120. The limiting component 500 is separated from the filter device 120 when in the separated state, and the filter device 120 is movable relative to the housing 100.

That is, when the limiting component 500 is in the limiting state, the relative position between the filter device 120 and the housing 100 can be fixed. In this case, the filter device 120 cannot be pulled out of the housing 100. During the movement of the water surface cleaning robot 1, the filter device 120 may not accidentally detach from the housing 100, so the water surface cleaning robot 1 has higher reliability.

When the water surface cleaning robot 1 completes the cleaning of the swimming pool or when the garbage in the filter device 120 reaches a preset capacity, the limiting component 500 may be switched from the limiting state to the separated state by switching the state of the limiting component 500, to separate the limiting component 500 from the filter device 120. At this moment, the filter device 120 may be pulled out of the housing 100, and the filter device 120 may be separated from the housing 100, which can facilitate removal of the garbage in the filter device 120 and facilitate reutilization of the filter device 120.

Thus, the water surface cleaning robot 1 according to the embodiments has advantages of being stable in structure and convenient for pulling operations.

As shown in FIGS. 6 to 8, the water surface cleaning robot 1 also includes an elastic element 600. The elastic element 600 is provided on the housing 100, the filter device 120 is provided with a first positioning structure 125, and the limiting component 500 is provided with a second positioning structure 310. When the limiting component 500 is in the limiting state, the second positioning structure 310 is engaged with the first positioning structure 125, such that the relative position between the filter device 120 and the housing 100 is fixed. The elastic element 600 is compressed by the filter device 120 and thus has the elastic force to drive the filter device 120 to move. When the limiting component 500 is in the separated state, the second positioning structure 310 is separated from the first positioning structure 125, and the filter device 120 is driven by the elastic element 600 to move outwardly from the receiving cavity 111.

That is, when the limiting component 500 is in the limiting state, the first positioning structure 125 is engaged with the second positioning structure 310, such that the relative position between the filter device 120 and the housing 100 can be fixed. At this moment, the filter device 120 cannot be pulled out of the housing 100. During the movement of the water surface cleaning robot 1, the filter device 120 may not accidentally detach from the housing 100, so the water surface cleaning robot 1 has higher reliability.

When the water surface cleaning robot 1 completes the cleaning of the swimming pool or when the garbage in the filter device 120 reaches the preset capacity, the limiting component 500 can be driven to move from the limiting state to the separated state by pressing the limiting component 500, to separate the second positioning structure 310 from the first positioning structure 125. At this moment, the filter device 120 can be pulled out from the housing 100, so the filter device 120 can be separated from the housing 100, which can facilitate removal of the garbage in the filter device 120 and facilitate reutilization of the filter device 120.

In addition, when the limiting component 500 is in the limiting state, the elastic element 600 is compressed between the filter device 120 and a cavity wall of the receiving cavity 111. When the limiting component 500 moves from the limiting state to the separated state, the elastic force of the elastic element 600 drives the filter device 120 to move outwardly from the receiving cavity 111, such that the filter device 120 protrudes from the outer surface of the housing 100, thereby making it easier for the user to exert a pulling force on the filter device 120, and making it more convenient to separate the filter device 120 from the housing 100.

As shown in FIGS. 7 to 8, an opening of the receiving cavity 111 is positioned on a side of the housing 100 in the horizontal direction, and the filter device 120 moves in the horizontal direction. The opening of the receiving cavity 111 may be the liquid inlet 121 or the liquid outlet. The water surface cleaning robot 1 also includes a first guide wheel 700 provided in a rollable manner on one of a lower side face of the filter device 120 and a lower wall face of the receiving cavity 111, where the first guide wheel 700 abuts against the other of the lower side face of the filter device 120 and the lower wall face of the receiving cavity 111. When the filter device 120 moves relative to the housing 100, the first guide wheel 700 rolls relative to the housing 100.

Because the filter device 120 moves in the horizontal direction, affected by gravity during the movement process, the lower side face of the filter device 120 comes into contact with the lower wall face of the receiving cavity 111, resulting in frictional force between the lower side face of the filter device 120 and the lower wall face of the receiving cavity 111, which adversely affects smoothness of the movement of the filter device 120. By providing the first guide wheel 700, direct contact between the lower side face of the filter device 120 and the lower wall face of the receiving cavity 111 can be avoided. Furthermore, when the filter device 120 moves relative to the housing 100, the first guide wheel 700 rolls relative to both the housing 100 and the filter device 120, which is conducive to reducing the frictional force, improving the smoothness of the movement of the filter device 120, and making the pulling operation smoother.

As shown in FIGS. 7 to 8, the water surface cleaning robot 1 also includes a second guide wheel 800 provided in a rollable manner on one of an upper side face of the filter device 120 and an upper wall face of the receiving cavity 111, where the second guide wheel 800 abuts against the other of the upper side face of the filter device 120 and the upper wall face of the receiving cavity 111. When the filter device 120 moves relative to the housing 100, the second guide wheel 800 rolls relative to the housing 100.

The lower side face of the filter device 120 abuts against the lower wall face of the receiving cavity 111 by means of the first guide wheel 700, and the upper side face of the filter device 120 abuts against the upper wall face of the receiving cavity 111 by means of the second guide wheel 800, which can prevent the filter device 120 from shaking in the vertical direction. Furthermore, when the filter device 120 moves relative to the housing 100, the second guide wheel 800 rolls relative to both the housing 100 and the filter device 120, which is conducive to reducing the frictional force, improving the smoothness of the movement of the filter device 120, and making the pulling operation smoother.

As shown in FIGS. 7 to 8, a plurality of first guide wheels 700 are provided, and the plurality of first guide wheels 700 are spaced apart along the moving direction of the filter device 120. The filter device 120 is supported by the plurality of first guide wheels 700, and the filter device 120 is less prone to tipping over in its moving direction, so the filter device 120 moves more smoothly relative to the housing 100.

Alternatively, a plurality of first guide wheels 700 are provided, and the plurality of first guide wheels 700 are spaced apart along a direction perpendicular to the moving direction of the filter device 120 (not shown in the figure). The filter device 120 is supported by the plurality of first guide wheels 700, and the filter device 120 is less prone to tipping over in the direction perpendicular to its moving direction, so the filter device 120 moves more smoothly relative to the housing 100.

Those skilled in the art may appreciate that the plurality of first guide wheels 700 may also be arranged in multiple rows and multiple columns along the moving direction of the filter device 120 and along the direction perpendicular to the moving direction of the filter device 120.

As shown in FIGS. 7 to 8, a plurality of second guide wheels 800 are provided, and the plurality of second guide wheels 800 are spaced apart along the moving direction of the filter device 120. In this way, the upper side face of the filter device 120 is supported by the plurality of second guide wheels 800 in the moving direction of the filter device 120, and the filter device 120 is subjected to more uniform forces in the moving direction of the filter device 120, thereby preventing the filter device 120 from tipping over in the moving direction of the filter device 120, such that the filter device 120 moves more smoothly relative to the housing 100.

Alternatively, a plurality of second guide wheels 800 are provided, and the plurality of second guide wheels 800 are spaced apart along a direction perpendicular to the moving direction of the filter device 120 (not shown in the figure). In this way, the upper side face of the filter device 120 is supported by the plurality of second guide wheels 800 in the moving direction of the filter device 120, and the filter device 120 is subjected to more uniform forces in the direction perpendicular to the moving direction of the filter device 120, thereby preventing the filter device 120 from tipping over in the direction perpendicular to the moving direction of the filter device 120, such that the filter device 120 moves more smoothly relative to the housing 100.

Those skilled in the art may appreciate that the plurality of second guide wheels 800 may also be arranged in multiple rows and multiple columns along the moving direction of the filter device 120 and along the direction perpendicular to the moving direction of the filter device 120.

As shown in FIGS. 7 to 9, the filter device 120 includes a box body 220, a third filter mesh, and a fourth filter mesh.

Each of an upper side face and a lower side face of the box body 220 is provided with a through hole 221. The fourth filter mesh is connected to the upper side face of the box body 220 to cover the through hole 221 on the upper side face of the box body 220. The third filter mesh is connected to the lower side face of the box body 220 to cover the through hole 221 on the lower side face of the box body 220. The lower side face of the box body 220 abuts against the first guide wheel 700, and the first guide wheel 700 is positioned to avoid the third filter mesh. The upper side face of the box body 220 abuts against the second guide wheel 800, and the second guide wheel 800 is positioned to avoid the fourth filter mesh.

Specifically, the through hole 221 may also be provided on each of the two opposite side faces of the box body 220 in the moving direction of the water surface cleaning robot 1. The filter device 120 includes the third filter mesh and the fourth filter mesh. The third filter mesh is connected to one side face of the box body 220 facing away from the opening of the receiving cavity 111, and the third filter mesh is configured to cover the through hole 221 on the side face of the box body 220 facing away from the opening of the receiving cavity 111. The fourth filter mesh is rotatably connected to one side face of the box body 220 facing towards the opening of the receiving cavity 111, and the fourth filter mesh is configured to cover the through hole 221 on the side face of the box body 220 facing towards the opening of the receiving cavity 111.

By providing the through holes 221 on the upper side face and the lower side face of the box body 220, when the filter device 120 is pulled out from the housing 100, the liquid inside the filter device 120 can flow out through the through holes 221 on the upper side face and the lower side face of the box body 220, which greatly increases the speed at which the liquid inside the filter device 120 flows out.

By using the filter meshes to cover the through holes 221 on the upper side face and the lower side face of the box body 220, the garbage in the box body 220 can be prevented from flowing out through the through holes 221 on the upper side face and the lower side face of the box body 220, which improves the filtering effect of the filter device 120 on the liquid.

The lower side face of the box body 220 abuts against the first guide wheel 700 and the first guide wheel 700 is positioned to avoid the third filter mesh, which can prevent the third filter mesh from being compressed and damaged by the first guide wheel 700, thereby extending service life of the third filter mesh. The upper side face of the box body 220 abuts against the second guide wheel 800 and the second guide wheel 800 is positioned to avoid the fourth filter mesh, which can prevent the fourth filter mesh from being compressed and damaged by the second guide wheel 800, thereby extending the service life of the fourth filter mesh.

As shown in FIGS. 7 to 8, one of the first positioning structure 125 and the second positioning structure 310 is a positioning slot and the other one is a positioning protrusion. The positioning protrusion is inserted into the positioning slot when the limiting component 500 is in the limiting state, where a slot opening direction of the positioning slot is perpendicular to the moving direction of the filter device 120.

In this way, the first positioning structure 125 and the second positioning structure 310 are simple in structure and convenient for engagement, which can effectively limit the position of the filter device 120 and is conducive to simplifying the structure of the water surface cleaning robot 1, making it convenient for disassembly and assembly, and improving production efficiency.

A side of the filter device 120 away from the opening of the receiving cavity 111 is spaced apart from the cavity wall of the receiving cavity 111. In this way, sufficient space is provided for the filter device 120 to continue moving into the receiving cavity 111. When the limiting component 500 is pressed, the limiting component 500 drives the second positioning structure 310 to move relative to the first positioning structure 125, and the first positioning structure 125 drives the filter device 120 to continue compressing the elastic element 600 such that the filter device 120 continues moving into the receiving cavity 111, making it easier for separation of the positioning slot from the positioning protrusion, and avoiding failure of the separation because the positioning protrusion is stuck on a slot wall of the positioning slot.

As shown in FIGS. 7 to 8, the opening of the receiving cavity 111 is positioned on a side of the housing 100 in the horizontal direction, and the filter device 120 moves in the horizontal direction. The first positioning structure 125 is arranged on the lower side face of the filter device 120, and the second positioning structure 310 is arranged on the upper side face of the limiting component 500. Thus, the limiting component 500 is positioned below the filter device 120. That is, the filter device 120 may be positioned at an upper part of the housing 100, or the limiting component 500 may also be arranged at a lower part of the housing 100. Therefore, the receiving cavity 111 may be arranged at the upper part of the housing 100, which can increase height of center of buoyancy of the housing 100, enhance movement stability of the water surface cleaning robot 1. Furthermore, the liquid inside the filter device 120 may flow downward, making movement of the liquid more convenient and reducing energy consumption.

As shown in FIGS. 7 to 8, the second positioning structure 310 is the positioning protrusion, where a side face of the positioning protrusion facing towards the opening of the receiving cavity 111 is an inclined plane 320 tapers from bottom to top in the direction away from the opening of the receiving cavity 111.

For example, a side face of the positioning protrusion facing away from the opening of the receiving cavity 111 is perpendicular to a horizontal plane, or the side face of the positioning protrusion facing away from the opening of the receiving cavity 111 is inclined (such as inclined backwards).

When the side face of the positioning protrusion facing away from the opening of the receiving cavity 111 is inclined, that is, when the side face is tapers from bottom to top in the direction away from the opening of the receiving cavity 111, an acute angle between the inclined plane 320 and the horizontal plane is smaller than an acute angle between the horizontal plane and the side face of the positioning protrusion facing away from the opening of the receiving cavity 111. In this way, in one aspect, the volume, cost, and weight of the second positioning structure 310 is reduced. In another aspect, the cross-sectional area of the second positioning structure 310 gradually decreases from bottom to top. Therefore, the connection area between the second positioning structure 310 and the upper side face of the limiting component 500 is larger, which is conducive to ensuring connection strength.

By arranging the inclined plane 320, the inclined plane 320 can play a guiding role during the insertion of the filter device 120 into the receiving cavity 111, making the movement of the filter device 120 smoother.

As shown in FIGS. 7 to 8, the limiting component 500 includes an elastic arm 330 and a first support arm 340.

A lower end of the elastic arm 330 is connected to the housing 100 and extends upward. The elastic arm 330 and the opening of the receiving cavity 111 are arranged on the same side of the housing 100. The first support arm 340 is connected to an upper end of the elastic arm 330. The first support arm 340 extends, along the moving direction of the filter device 120, in the direction away from the opening of the receiving cavity 111, and the second positioning structure 310 is disposed on an upper side face of the first support arm 340.

It should be noted that the elastic arm 330 and the housing 100 may be directly connected into a whole. The elastic arm 330 has elasticity after being pressed and deformed. After the pressing force disappears, the elastic arm 330 is driven back to its original state by its own elastic force. Alternatively, the elastic arm 330 may be separated from the housing 100, and the water surface cleaning robot 1 may additionally be provided with other restoration structure connected to the elastic arm 330 and the housing 100, respectively. When the elastic arm 330 is not subjected to the pressing force, the restoration structure drives the limiting component 500 to be maintained in the limiting state by means of the elastic arm 330.

When the user presses the elastic arm 330 into the receiving cavity 111, the upper end of the elastic arm 330 may rotate around the lower end of the elastic arm 330 to drive the first support arm 340 to rotate around the lower end of the elastic arm 330, causing the second positioning structure 310 to rotate around the lower end of the elastic arm 330. The second positioning structure 310 is gradually separated from the first positioning structure 125, such that the filter device 120 can move relative to the housing 100.

By extending the elastic arm 330 in the vertical direction and the first support arm 340 in the horizontal direction, an "L" shape is formed between the elastic arm 330 and the first support arm 340, providing more sufficient space for movement of the elastic arm 330 and the first support arm 340. Furthermore, the elastic arm 330 and the second positioning structure 310 may be separately positioned at two ends of the first support arm 340. When the elastic arm 330 is pressed, the movement length of the second positioning structure 310 is greater, which is beneficial for ensuring complete separation between the second positioning structure 310 and the first positioning structure 125.

As shown in FIGS. 7 to 8, the outer surface of the limiting component 500 is flush with the outer surface of the housing 100. In this way, the water surface cleaning robot 1 is neat in appearance, and the transition between the limiting component 500 and the housing 100 is smooth. The transition between the limiting component 500 and the housing 100 is not prone to dust accumulation, making it easy to clean and achieving high space utilization.

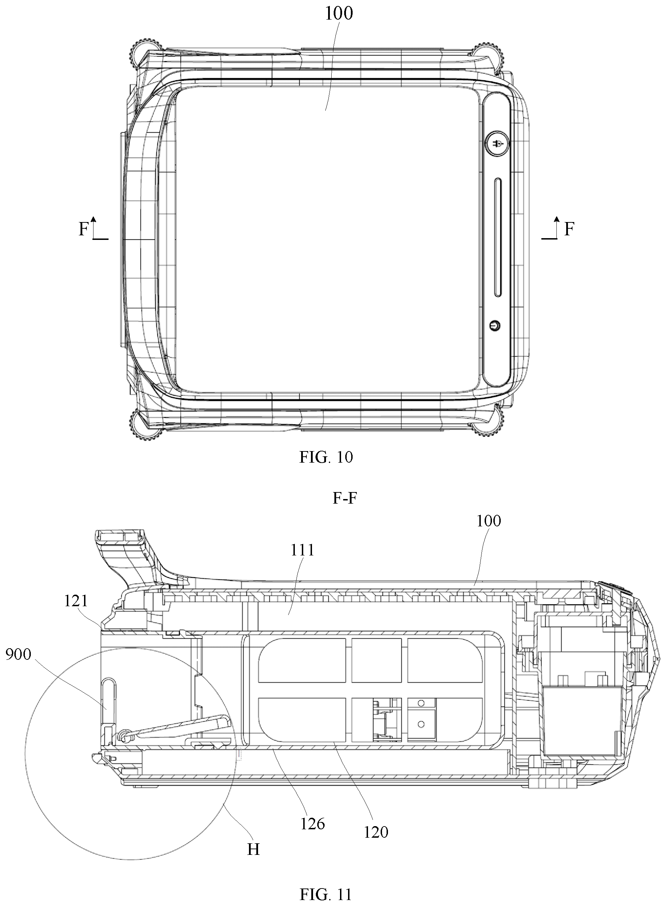

In some embodiments, as shown in FIGS. 10 to 13, the water surface cleaning robot 1 also includes a locking member 900, the receiving cavity 111 is provided inside the housing 100, the receiving cavity 111 is communicated with the liquid inlet 121, and a stopping portion 1012 is provided inside the receiving cavity 111. The filter device 120 is arranged in the receiving cavity 111 in a retractable manner, and the liquid inlet 121 is also configured to allow the filter device 120 to enter or exit the receiving cavity 111. The filter device 120 includes a first box wall 126 having deformability, where an outer surface of the first box wall 126 is provided with a limiting protrusion 1261. When the filter device 120 is positioned in the receiving cavity 111, the limiting protrusion 1261 abuts against the stopping portion 1012. The locking member 900 is movably connected to the filter device 120, and the locking member 900 has a locked state and an unlocked state. When in the locked state, the locking member 900 abuts against an inner surface of the first box wall 126 and exerts a supporting force on the first box wall 126 to maintain an abutting relationship between the limiting protrusion 1261 and the stopping portion 1012, such that the filter device 120 remains fixed relative to the housing 100. When in the unlocked state, the locking member 900 is separated from the first box wall 126.

In the pool cleaning robot in the embodiments of the present disclosure, the receiving cavity 111 is arranged in the housing 100, and the filter device 120 is arranged in the receiving cavity 111. Through the movement of the pool cleaning robot in the pool, the liquid in the pool can continuously enter the filter device 120, and then flow back into the pool after filtered by the filter device 120, thereby achieving the cleaning treatment of the pool.

In the water surface cleaning robot 1 in this embodiment, the liquid inlet 121 is provided on the housing 100 and is communicated with the receiving cavity 111. The filter device 120 can enter and exit the receiving cavity 111 through the liquid inlet 121, to facilitate the installation and disassembly of the filter device 120. When the filter device 120 is installed, the filter device 120 can be first pushed into the receiving cavity 111 through the liquid inlet 121. After the filter device 120 moves to a preset position, the limiting protrusion 1261 on the first box wall 126 abuts against the stopping portion 1012 in the receiving cavity 111. However, the deformability of the first box wall 126 makes the abutting relationship between the limiting protrusion 1261 and the stopping portion 1012 not reliable. Therefore, after the filter device 120 moves to the preset position, the locking member 900 on the filter device 120 needs to be adjusted to the locked state, such that the locking member 900 abuts against the inner surface of the first box wall 126 of the filter device 120 and exerts a supporting force on the first box wall 126. Under the action of the supporting force, the abutting relationship between the limiting protrusion 1261 and the stopping portion 1012 can be maintained, such that the filter device 120 remains fixed relative to the housing 100. In this way, the stable installation of the filter device 120 on the housing 100 can be achieved.

When the water surface cleaning robot 1 completes a cleaning task and it is needed to clean the filter device 120, the locking member 900 can be adjusted to the unlocked state, such that the locking member 900 is separated from the first box wall 126, thereby releasing the supporting force on the first box wall 126. At this moment, the filter device 120 can be pulled outward, such that the filter device 120 can be pulled out of the receiving cavity 111 by an external force. During this process, the deformability of the first box wall 126 can be utilized to release the abutting relationship between the limiting protrusion 1261 on the first box wall 126 and the stopping portion 1012, without having an adverse effect on pulling out the filter device 120.

In summary, in the water surface cleaning robot in this embodiment, the filter device 120 can be installed in the receiving cavity 111 of the housing 100 in a retractable manner. By adjusting the state of the locking member 900, the filter device 120 can be kept in the receiving cavity 111, or the filter device 120 can be easily taken out. In this way, the convenience of cleaning a filter box is improved, thereby enhancing user experience.

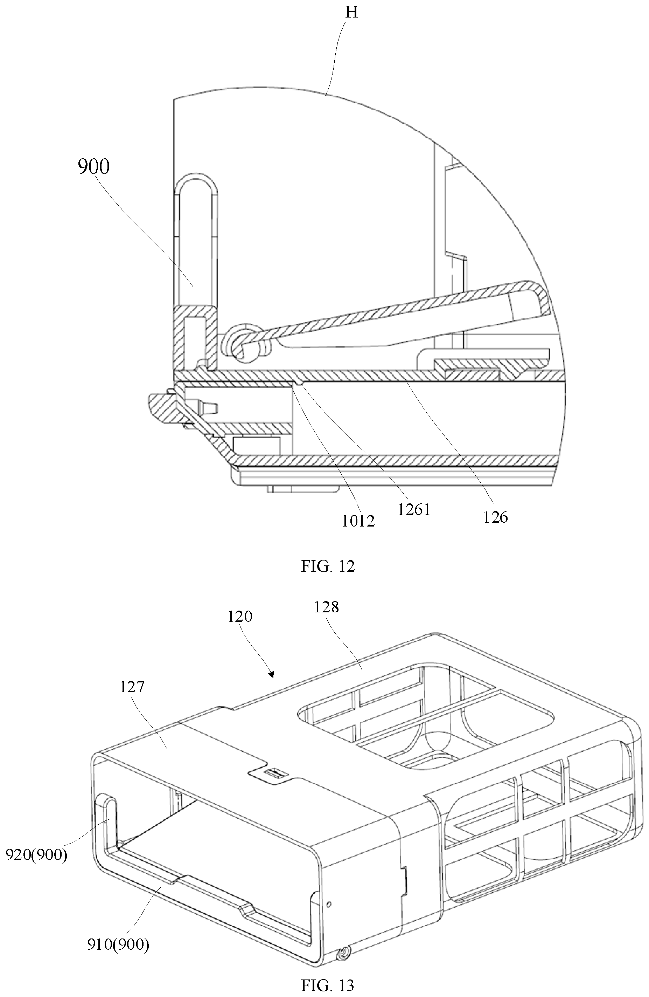

As shown in FIG. 12, in some embodiments, the limiting protrusion 1261 is a hemispherical structure. In this way, in the process when the filter device 120 is pulled out of the receiving cavity 111, by using a spherical surface of the limiting protrusion 1261, it is easier to release the abutting relationship between the limiting protrusion 1261 and the stopping portion 1012, thereby reducing difficulty of taking out the filter device 120.

FIG. 13 is a schematic structural diagram of the filter device according to an embodiment of the present disclosure. As shown in FIG. 13, in some embodiments, the locking member 900 includes a second support arm 910 and a connecting arm 920. One end of the connecting arm 920 is connected to the second support arm 910, and the other end of the connecting arm 920 is rotatably connected to the filter device 120. When the locking member 900 is in the locked state, the second support arm 910 abuts against the first box wall 126 and exerts a supporting force on the first box wall 126. When the locking member 900 is in the unlocked state, the second support arm 910 is separated from the first box wall 126.

The state adjustment process of the locking member 900 is as below. The connecting arm 920 is rotated relative to the filter device 120, such that the second support arm 910 moves until it abuts against the first box wall 126. At this moment, the locking member 900 is adjusted to the locked state. When unlocking is required, the connecting arm 920 is rotated relative to the filter device 120 such that the second support arm 910 is separated from the first box wall 126. At this moment, the locking member 900 is adjusted to the unlocked state. As can be seen, the locking member 900 includes a second support arm 910 and the connecting arm 920 connected to each other, where the connecting arm 920 is rotatably connected to the filter device 120, making the state adjustment process of the locking member 900 simpler and easier to operate.

Further, the number of the connecting arms 920 is two, and the two connecting arms 920 are separately positioned at two ends of the second support arm 910. The two connecting arms 920 are separately connected to the two opposite box walls of the filter device 120. When the filter device 120 is installed in the receiving cavity 111, the locking member 900 is positioned at an end of the filter device 120 closer to the liquid inlet 121.

The locking member 900 has the second support arm 910 and the two connecting arms 920, where the two connecting arms 920 are positioned at two ends of the second support arm 910, such that the locking member 900 is U-shaped as a whole, which also allows the locking member 900 to be used as a handle. When it is required to take the filter device 120 out of the receiving cavity 111, the locking member 900 can be first adjusted to the unlocked state, and then the locking member 900 serving as the handle is gripped to pull the filter device 120 outward. In this way, it is easier to take out the filter device 120.

In addition, when the filter device 120 is installed in the receiving cavity 111, the locking member 900 is positioned at an end of the filter device 120 closer to the liquid inlet 121, which makes it easier to adjust the state of the locking member 900 because the locking member 900 is positioned at the liquid inlet 121 of the receiving cavity 111. In addition, it also makes the locking member 900 easier to grip when it is used as the handle.

In one embodiment, the second support arm 910 has a supporting plane, and the supporting plane is in contact with the first box wall 126 when the locking member 900 is in the locked state. The second support arm 910 has the supporting plane, which allows the contact between the second support arm 910 and the first box wall 126 is a surface contact when the locking member 900 is in the locked state. This can disperse the supporting force subjected to the first box wall 126 and help to avoid the problem of structural damage caused by excessive concentration of the force subjected to the first box wall 126.

In some embodiments, a distance from a connection point between the locking member 900 and the filter device 120 to the limiting protrusion 1261 along the moving direction of the filter device 120 is less than or equal to 1/5 of a size of the filter device 120 along its own moving direction.

When the installation position of the locking member 900 is too far away from the position of the limiting protrusion 1261, the supporting force on the limiting protrusion 1261 is smaller, which makes it difficult to maintain the abutting relationship between the limiting protrusion 1261 and the stopping portion 1012. Therefore, the installation position of the locking member 900 should not be too far away from the position of the limiting protrusion 1261. In this embodiment, the distance from the connection point between the locking member 900 and the filter device 120 to the limiting protrusion 1261 along the moving direction of the filter device 120 is less than or equal to 1/5 of the size of the filter device 120 along its own moving direction. This setting is conducive to ensuring that the locking member 900 can provide sufficient supporting force to the limiting protrusion 1261. In this way, it is ensured to maintain the relatively stable abutting relationship between the limiting protrusion 1261 and the stopping portion 1012 in the locked state.

In some embodiments, the liquid inlet 121 is positioned on a side of the housing 100 in the horizontal direction, and the filter device 120 enters or exits the receiving cavity 111 by moving in the horizontal direction. The first box wall 126 is a lower box wall of the filter device 120.

The liquid inlet 121 is positioned on a side of the housing 100 in the horizontal direction, such that the filter device 120 can enter or exit the receiving cavity 111 by moving in the horizontal direction.

In addition, when the limiting protrusion 1261 is arranged on a side wall (such as a left side wall or a right side wall) of the filter device 120, the locking member 900 abuts against the left box wall or the right box wall of the filter device 120 when the locking member 900 is in the locked state, this may easily cause a lateral center-of-gravity shift of the water surface cleaning robot, which is not conducive to ensuring the balance of the water surface cleaning robot during underwater operations. In this embodiment, the first box wall 126 is the lower box wall of the filter device 120, that is, the limiting protrusion 1261 is positioned on the outer surface of the lower box wall of the filter device 120. In this way, when the locking member 900 is in the locked state, the locking member 900 abuts against the lower box wall of the filter device 120, which does not cause the lateral center-of-gravity shift of the water surface cleaning robot, such that it is conducive to ensuring the balance of the water surface cleaning robot during underwater operations.

Furthermore, in the locked state, the locking member 900 abuts against the lower box wall of the filter device 120, which makes it easier for an operator to observe the position where the locking member 900 is abutted, compared to the situation where the locking member 900 abuts against an upper box wall of the filter device 120. In this way, the operator can more easily determine whether the locking member 900 abuts against the box wall better.

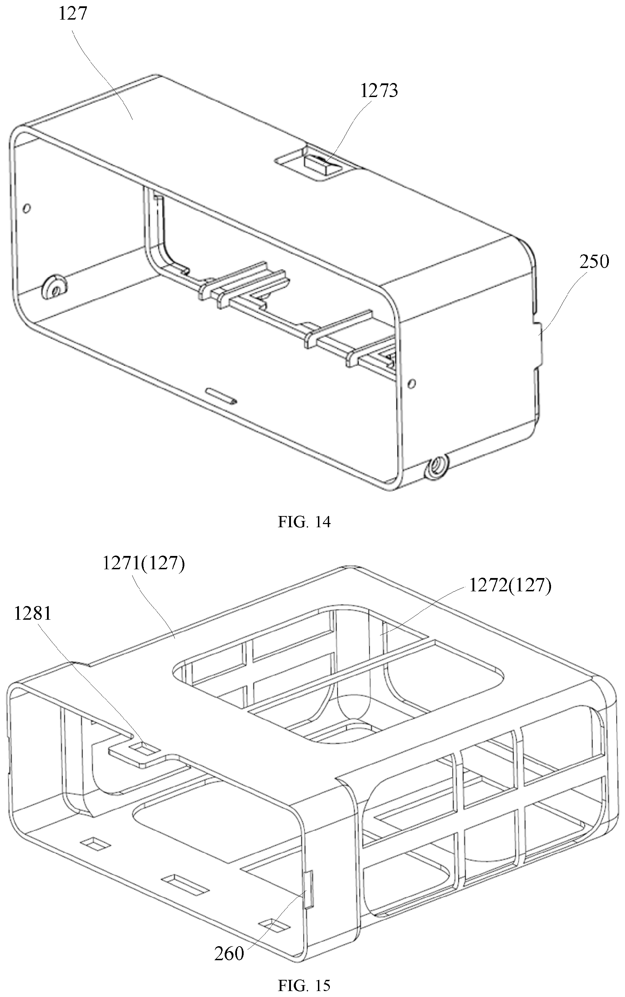

FIG. 14 is a schematic structural diagram of a second part of the filter device according to an embodiment of the present disclosure, and FIG. 15 is a schematic structural diagram of a first part of the filter device according to an embodiment of the present disclosure. As shown in FIGS. 13, 14 and 15, in some embodiments, the filter device 120 includes a first part 127 and a second part 128. The first part 127 includes a tubular main body portion 1271 and an end wall 1272 positioned at an end of the main body portion 1271, where the cross-sectional shape of the main body portion 1271 is rectangular. The second part 128 is a tubular structure, the cross-sectional shape of the second part 128 is rectangular, and the second part 128 is detachably connected to an end of the main body portion 1271 away from the end wall 1272. The locking member 900 is connected to the second part 128.

Generally, a filter element such as a filter mesh, a filter layer, or a filter cartridge may be installed inside the filter device 120. Because the locking member 900 is connected to the inner wall of the filter device 120, the locking member 900 may hinder the process of installing the filter element into the filter device 120. In this embodiment, the filter device 120 includes the first part 127 and the second part 128, where the first part 127 is detachably connected to the second part 128, and the locking member 900 is connected to the second part 128. In this way, during the installation of the filter element, the first part 127 and the second part 128 can be separated first, such that the process of installing the filter element is not be hindered by the locking member 900. After the installation of the filter element is completed, the first part 127 and the second part 128 are assembled, such that the filter device 120 provided with the filter element can be obtained.

It is to be understood that the first part 127 serves as a part of the filter device 120 that is mainly used for accommodation. Hollowed-out areas are provided on a plurality of wall surfaces of the first part 127, and can be configured for water entry or exit. The hollowed-out areas may also be provided with filter meshes to perform a first filtration process on the water entering the filter device 120.

As shown in FIGS. 13, 14 and 15, in one embodiment, one of the second part 128 and the main body portion 1271 is provided with a snap-fit protrusion 1273, the other of the second part 128 and the main body portion 1271 is provided with a clamping slot 1281, and the snap-fit protrusion 1273 fits to the clamping slot 1281. Thus, through mutual engagement between the snap-fit protrusion 1273 and the clamping slot 1281, the detachable connection between the second part 128 and the main body portion 1271 is achieved. In addition, the mutual engagement between the snap-fit protrusion 1273 and the clamping slot 1281 also facilitates assembly and disassembly between the second part 128 and the first part 127, which can improve efficiency of assembly and disassembly.

Further, one of the second part 128 and the main body portion 1271 is provided with a limiting lug 250, and the other of the second part 128 and the main body portion 1271 is provided with a groove 260, where the limiting lug 250 fits to the groove 260. Through mutual engagement between the limiting lug 250 and the groove 260, the relative positions of the second part 128 and the main body portion 1271 can be limited. Arrangement of the limiting lug 250 and the groove 260 may reduce the number of the snap-fit protrusions 1273 and the clamping slots 1281, making it relatively labor-saving to disassemble the second part 128 from the first part 127.

A control method for the water surface cleaning robot 1 of the present disclosure is described below.

The water surface cleaning robot 1 is controlled to carry out garbage cleaning on a side and/or a corner.

The water surface cleaning robot 1 is selected from at least one of the water surface cleaning robots 1 mentioned above in the present disclosure.

Because the suction device of the water surface cleaning robot 1 mentioned above in the present disclosure is positioned inside the housing 100, the suction device is not prone to colliding with the pool wall. Therefore, the water surface cleaning robot 1 may be controlled by the controller to carry out garbage cleaning on the side and/or the corner.

The first side face 101 has a first side edge 103 and a second side edge 104 arranged opposite to each other. The first side edge 103 and the second side edge 104 are both perpendicular to the liquid surface of the liquid to be cleaned. A first sensor is close to the first side edge 103, and a second sensor is close to the second side edge 104.

The control method for the water surface cleaning robot 1 also includes:
obtaining a first distance fed back from the first sensor and a second distance fed back from the second sensor;
determining whether an absolute value of a difference between the first distance and the second distance is less than a preset value; and
when the absolute value is not less than the preset value, adjusting power of at least one of a first pump body and a second pump body based on the first distance and the second distance such that the first distance is equal to the second distance.

By arranging the at least two distance sensors and arranging the two distance sensors close to the first side edge 103 and the second side edge 104, respectively, the distance between a side of the first side face 101 in the horizontal direction and the obstacle 400 can be detected, thereby effectively adjusting the moving direction and the moving state of the water surface cleaning robot 1. For example, the moving direction includes moving forward in a straight line, moving forward to the left, moving forward to the right, moving backward in the straight line, moving backward to the left, and moving backward to the right. The moving state includes moving forward, moving backward, and staying still.

The first distance from the first side edge 103 to the obstacle 400 is obtained according to a detection result from the at least one distance sensor close to the first side edge 103. The second distance from the second side edge 104 to the obstacle 400 is obtained according to a detection result from the at least one distance sensor close to the second side edge 104. When the first distance is not equal to the second distance, the controller controls the pump body corresponding to the first side edge 103 to act and/or the controller controls the pump body corresponding to the second side edge 104 to act, such that the first distance is equal to the second distance.

Specifically, a plurality of pump bodies may be provided, and the first pump body of the plurality of pump bodies corresponds to the first side edge 103 in position, so the first pump body may drive the first side edge 103 to move, such as drive the first side edge 103 to move forward or backward. The second pump body of the plurality of pump bodies corresponds to the second side edge 104 in position, so the second pump body may control the second side edge 104 to move, such as drive the second side edge 104 to move forward or backward.

By comparing a magnitude relationship between the first distance and the second distance, it can be determined whether the first side face 101 is parallel to the obstacle 400. When the first side face 101 is not parallel to the obstacle 400, the first distance between the first side edge 103 and the obstacle 400 is adjusted by regulating the power of at least one of the first pump body and the second pump body, or the second distance between the second side edge 104 and the obstacle 400 is adjusted, or the first distance between the first side edge 103 and the obstacle 400 and the second distance between the second side edge 104 and the obstacle 400 are simultaneously adjusted.

In this way, it can be ensured that the first side face 101 is parallel to the obstacle 400, such that each region of the liquid inlet 121 has the same ability in guiding the liquid to be cleaned, to more effectively clean the garbage near the obstacle 400.

The control method for the water surface cleaning robot 1 also includes:
controlling the first pump body to reduce the power and/or the second pump body to increase the power when the first distance is greater than the second distance;
controlling the first pump body to increase the power and/or the second pump body to reduce the power when the first distance is less than the second distance;
controlling the power of the first pump body to be equal to the power of the second pump body when the first distance is equal to the second distance.

The control method for the water surface cleaning robot 1 also includes:
determining whether both the first distance and the second distance are not less than a second preset value;
when both the first distance and the second distance are not less than the second preset value, controlling both the first pump body and the second pump body to operate at a first preset power;
when any of the first distance and the second distance is less than the second preset value, controlling both the first pump body and the second pump body to operate at a second preset power, where the first preset power is greater than the second preset power.

The pump body operates at a first power when the distance between the obstacle 400 and the water surface cleaning robot 1 is greater than a preset value.

The pump body operates at a second power when the distance between the obstacle 400 and the water surface cleaning robot 1 is not greater than the preset value, the second power being greater than the first power.

Specifically, when the distance between the obstacle 400 and the water surface cleaning robot 1 is greater than the preset value, the distance between the obstacle 400 and the water surface cleaning robot 1 is farther. Therefore, the water surface cleaning robot 1 can continue moving towards the obstacle 400. At this moment, the pump body operates at the lower first power, to assist in guiding flow of the liquid to be cleaned. At this moment, the energy consumption is lower, and the endurance of the water surface cleaning robot 1 is ensured.

When the distance between the obstacle 400 and the water surface cleaning robot 1 is not greater than the preset value, the distance between the obstacle 400 and the water surface cleaning robot 1 is nearer. Therefore, the water surface cleaning robot 1 stops moving towards the obstacle 400 to avoid the collision between the housing 100 and the obstacle 400, thereby reducing the probability of damage to the water surface cleaning robot 1. At this moment, the pump body operates at the higher second power, such that a large amount of the liquid to be cleaned can be guided to flow into the filter cavity 122, thereby increasing the speed of filtering the garbage.

Other configurations and operations of the water surface cleaning robot 1 according to the embodiments of the present disclosure are known to those of ordinary skill in the art and thus are not described in detail herein.

The same or similar reference numbers in the accompanying drawings of this embodiment correspond to the same or similar components. In the description of the present disclosure, it should be understood that if there are terms such as "up", "down", "left", "right" indicating orientation or positional relationships based on the orientation or positional relationships shown in the accompanying drawings, it is only for the convenience of describing the present disclosure and simplifying the description, and does not indicate or imply that the device or component referred to must have a specific orientation, be constructed and operated in a specific orientation. Therefore, the language used to describe the positional relationships in the accompanying drawings is only for illustrative purposes and cannot be understood as a limitation of the present disclosure. For those ordinarily skilled in the art, the specific meanings of the terms may be understood according to specific situations.

The embodiments set forth above are only illustrated as preferred embodiments of the present disclosure, and are not intended to limit the present disclosure. All modifications, equivalent substitutions and improvements made within the spirit and principles of the present disclosure shall fall within the protection scope of the present disclosure.

## Claims

1. A water surface cleaning robot comprising:
a housing provided with a liquid inlet and a liquid outlet;
a filter device arranged inside the housing; and
a suction assembly arranged inside the housing, wherein the suction assembly comprises a pump body, and under an action of the suction assembly, a liquid to be cleaned enters the filter device through the liquid inlet, and the filtered liquid drains out of the housing through the liquid outlet.

2. The water surface cleaning robot according to claim 1, wherein
the housing has a first side face and a second side face arranged opposite to each other in a moving direction of the water surface cleaning robot, the first side face being provided with the liquid inlet, and the first side face and/or the second side face being provided with the liquid outlet.

3. The water surface cleaning robot according to claim 2, wherein at least one distance sensor is provided on the first side face and/or the second side face, the at least one distance sensor being configured to detect a positional relationship of the water surface cleaning robot; and/or
at least one anti-collision block is provided on the first side face and/or the second side face.

4. The water surface cleaning robot according to claim 2, wherein at least two distance sensors are provided on the first side face adjacent to two ends of the housing, each of the at least two distance sensors being configured to detect a distance between a corresponding end and an external object; and/or
at least two distance sensors are provided on the second side face adjacent to the two ends of the housing, each of the at least two distance sensors being configured to detect a distance between a corresponding end and an external object.

5. The water surface cleaning robot according to claim 1, wherein the housing has a first side face and a second side face arranged opposite to each other in a moving direction of the water surface cleaning robot, the housing being provided with a filter cavity communicated with the liquid inlet, the liquid inlet being arranged on the first side face; and the water surface cleaning robot further comprises a distance sensor and a controller, the distance sensor being arranged on the housing and configured to detect whether there is an obstacle in an orientation of the first side face and/or detect a distance between the obstacle and the water surface cleaning robot; and
the controller is connected to the pump body and the distance sensor, respectively, the controller being configured to control an operating state of the pump body according to a detection result from the distance sensor.

6. The water surface cleaning robot according to claim 5, wherein when the distance sensor detects that there is an obstacle in an opening direction of the liquid inlet:
the pump body operates at a first power when the distance between the obstacle and the water surface cleaning robot is greater than a preset value; or
the pump body operates at a second power when the distance between the obstacle and the water surface cleaning robot is not greater than the preset value, the second power being greater than the first power.

7. The water surface cleaning robot according to claim 5, wherein the first side face has a first side edge and a second side edge arranged opposite to each other, both the first side edge and the second side edge are perpendicular to a liquid surface of the liquid to be cleaned; a plurality of distance sensors are provided, at least one of the plurality of distance sensors is close to the first side edge, and another one of the plurality of distance sensors is close to the second side edge.

8. The water surface cleaning robot according to claim 7, wherein a first distance from the first side edge to the obstacle is obtained according to a detection result from the at least one distance sensor close to the first side edge;
a second distance from the second side edge to the obstacle is obtained according to a detection result from at least one distance sensor close to the second side edge; and
when the first distance is not equal to the second distance, the controller controls the pump body corresponding to the first side edge to act and/or the controller controls the pump body corresponding to the second side edge to act, such that the first distance is equal to the second distance.

9. The water surface cleaning robot according to claim 8, wherein when the first distance is greater than the second distance and the second distance is equal to zero, the controller controls the pump body corresponding to the first side edge to act such that both the first distance and the second distance are equal to zero.

10. The water surface cleaning robot according to claim 5, wherein the first side face is provided with a front drainage port, and the second side face is provided with a rear drainage port; and
the water surface cleaning robot has a forward moving mode and a backward moving mode, and the pump body comprises an impeller; when the water surface cleaning robot is in the forward moving mode, the impeller rotates in a first direction to guide the liquid to be cleaned in the housing to flow towards the rear drainage port; and when the water surface cleaning robot is in the backward moving mode, the impeller rotates in a second direction opposite to the first direction to guide the liquid in the housing to flow towards the front drainage port.

11. The water surface cleaning robot according to claim 5, wherein the housing is provided with an anti-collision block, and the anti-collision block extends beyond the first side face in a direction away from the second side face.

12. The water surface cleaning robot according to claim 11, wherein a portion of the liquid inlet is positioned above a liquid surface of the liquid to be cleaned, and another portion of the liquid inlet is positioned below the liquid surface;
the distance sensor and/or the anti-collision block are positioned below the liquid inlet.

13. The water surface cleaning robot according to claim 1, wherein a floating plate assembly is provided at the liquid inlet, the floating plate assembly being rotatably arranged on the housing or the filter device between an open position and a closed position, when the water surface cleaning robot is in a quiescent state, the floating plate assembly stays in the closed position under an action of buoyancy of the liquid to be cleaned, and when the floating plate assembly is in the closed position, at least a portion of the liquid inlet is covered; and
when the floating plate assembly is opened, at least a portion of the liquid inlet is in an open state to allow the liquid to be cleaned to enter.

14. The water surface cleaning robot according to claim 13, wherein a rotation axis of the floating plate assembly is positioned below a liquid surface of the liquid to be cleaned.

15. The water surface cleaning robot according to claim 13, wherein the filter device is internally provided with a filter cavity:
the floating plate assembly has a first side and a second side, the first side and the second side being arranged on two opposite sides of the floating plate assembly, the first side being rotatably connected to the housing or a side wall of the filter cavity or the filter device; and
when the floating plate assembly switches from the open position to the closed position, the second side rotates upward around a rotation axis of the floating plate assembly.

16. The water surface cleaning robot according to claim 15, wherein when the floating plate assembly is in the closed position, the first side is positioned below the second side.

17. The water surface cleaning robot according to claim 13, wherein to ensure that density of the floating plate assembly is less than density of the liquid to be cleaned, the floating plate assembly is made in at least one of following ways:
at least a portion of the floating plate assembly is made of a material whose density is less than the density of the liquid to be cleaned;
the floating plate assembly is provided with a cavity;
the floating plate assembly is provided with a floating block whose density is less than the density of the liquid to be cleaned.

18. The water surface cleaning robot according to claim 13, wherein the housing is provided with a limit block, and when the floating plate assembly is in the closed position, the floating plate assembly stops at the limit block to limit a rotation stroke of the floating plate assembly.

19. The water surface cleaning robot according to claim 13, wherein the floating plate assembly comprises:
a floating plate skeleton rotatably provided on the housing; and
a first filter mesh arranged in the floating plate skeleton, when the floating plate assembly is in the closed position, at least a portion of the liquid inlet is covered by the first filter mesh;
wherein to ensure that density of the floating plate skeleton is less than density of the liquid to be cleaned, the floating plate skeleton is made in at least one of following ways:
at least a portion of the floating plate skeleton is made of a material whose density is less than the density of the liquid to be cleaned;
the floating plate skeleton is provided with a cavity;
the floating plate skeleton is provided with a floating block whose density is less than the density of the liquid to be cleaned.

20. The water surface cleaning robot according to claim 1, wherein the filter device and/or the housing are provided with an inlet, the housing is provided with a liquid channel connected to the inlet and the liquid outlet respectively, after being filtered by the filter device, the liquid to be cleaned enters the liquid channel through the inlet, and then drains out through the liquid outlet.

21. The water surface cleaning robot according to claim 20, wherein at least two inlets are provided, the at least two inlets being arranged on an inner wall of the housing; and under the action of the suction assembly, the filtered liquid enters the liquid channel through one inlet of the inlets and drains out through the outlet corresponding to this inlet, the pump body being inside the liquid channel.

22. The water surface cleaning robot according to claim 21, wherein the housing has a first side face and a second side face arranged opposite to each other in a moving direction of the water surface cleaning robot, at least two different inlets correspond to different liquid channels, one of the liquid channels is close to a third side face of the housing, another one of the liquid channels is close to a fourth side face of the housing, and both the third side face and the fourth side face are arranged opposite to each other and are perpendicular to the first side face and the second side face;
the different liquid channels correspond to different outlets; and
under the action of the suction assembly, the liquid enters the different liquid channels via the different inlets and drains out through the different outlets, such that the water surface cleaning robot moves forward or backward or makes a turn.

23. The water surface cleaning robot according to claim 1, wherein the housing is further provided with a filter cavity and a liquid channel, wherein the liquid inlet, the filter cavity and the liquid channel are sequentially communicated, the housing has a first side face and a second side face arranged opposite to each other in a moving direction of the water surface cleaning robot, the pump body is arranged in the liquid channel, the first side face is further provided with a front drainage port, the second side face is provided with a rear drainage port, and the liquid channel is communicated with the front drainage port and the rear drainage port, respectively; and
wherein the water surface cleaning robot has a forward moving mode and a backward moving mode, the pump body guides liquid in the liquid channel to the rear drainage port when the water surface cleaning robot is in the forward moving mode, and the pump body guides the liquid in the liquid channel to the front drainage port when the water surface cleaning robot is in the backward moving mode.

24. The water surface cleaning robot according to claim 23, wherein the pump body comprises an impeller, and a rotation axis of the impeller extends along the moving direction of the water surface cleaning robot; the impeller rotates in a first direction when the water surface cleaning robot is in the forward moving mode, and the impeller rotates in a second direction when the water surface cleaning robot is in the backward moving mode, the first direction being opposite to the second direction.

25. The water surface cleaning robot according to claim 24, wherein the filter cavity is communicated with the liquid channel selectively through a front water inlet or a rear water inlet, both the front water inlet and the rear water inlet are communicated with the liquid channel, the front water inlet is positioned between the impeller and the first side face, and the rear water inlet is positioned between the impeller and the second side face;
when the water surface cleaning robot is in the forward moving mode, the front water inlet is communicated with the filter cavity, and the rear water inlet is disconnected from the filter cavity;
when the water surface cleaning robot is in the backward moving mode, the front water inlet is disconnected from the filter cavity, and the rear water inlet is communicated with the filter cavity.

26. The water surface cleaning robot according to claim 25, wherein a distance between the front water inlet and the first side face is greater than a distance between the front water inlet and the second side face, and a distance between the rear water inlet and the first side face is greater than a distance between the rear water inlet and the second side face; and/or
a side wall of the liquid channel facing towards the filter cavity in a horizontal direction has an oblique segment, the oblique segment is obliquely arranged with respect to a rotation shaft of the impeller, and the rotation shaft of the impeller passes through the oblique segment.

27. The water surface cleaning robot according to claim 25, wherein a baffle is provided at each of the front water inlet and the rear water inlet, and is rotatably connected to the housing between an open position and a closed position;
when the baffle is in the open position, the liquid channel is communicated with the filter cavity through the front water inlet or the rear water inlet corresponding to the baffle; and
when the baffle is in the closed position, the liquid channel is prevented from being communicated with the filter cavity through the front water inlet or the rear water inlet corresponding to the baffle.

28. The water surface cleaning robot according to claim 25, wherein the housing is provided with a plurality of liquid channels that are spaced apart, and an arrangement direction of the plurality of liquid channels, a moving direction of the housing and a vertical direction are perpendicular to each other; and
the plurality of liquid channels comprise a first liquid channel and a second liquid channel respectively arranged on two opposite sides of the filter cavity.

29. The water surface cleaning robot according to claim 28, wherein the water surface cleaning robot has a first steering mode and a second steering mode; when the water surface cleaning robot is in the first steering mode, the impeller in the first liquid channel rotates in the first direction, and the impeller in the second liquid channel rotates in the second direction; and when the water surface cleaning robot is in the second steering mode, the impeller in the first liquid channel rotates in the second direction, and the impeller in the second liquid channel rotates in the first direction.

30. The water surface cleaning robot according to claim 29, wherein the front water inlet comprises a first front water inlet and a second front water inlet, and the rear water inlet comprises a first rear water inlet and a second rear water inlet, both the first front water inlet and the first rear water inlet being communicated with the first liquid channel, and both the second front water inlet and the second rear water inlet being communicated with the second liquid channel;
when the water surface cleaning robot is in the first steering mode, the first front water inlet is communicated with the filter cavity, the first rear water inlet is disconnected from the filter cavity, the second front water inlet is disconnected from the filter cavity, and the second rear water inlet is communicated with the filter cavity; and
when the water surface cleaning robot is in the second steering mode, the first front water inlet is disconnected from the filter cavity, the first rear water inlet is communicated with the filter cavity, the second front water inlet is communicated with the filter cavity, and the second rear water inlet is disconnected from the filter cavity.

31. The water surface cleaning robot according to claim 30, wherein the first front water inlet, the second front water inlet, the first rear water inlet, and the second rear water inlet are positioned between the first liquid channel and the second liquid channel.

32. The water surface cleaning robot according to claim 1, wherein a receiving cavity is provided inside the housing, the filter device is movably disposed in the receiving cavity, and the filter device is provided with a first positioning structure;
the water surface cleaning robot further comprises:
a limiting component arranged on the housing, the limiting component being provided with a second positioning structure;
wherein the limiting component is switchable between a limiting state and a separated state, when the limiting component is in the limiting state, the limiting component abuts against the filter device, and the second positioning structure is engaged with the first positioning structure to fix a relative position between the filter device and the housing; and
when the limiting component is in the separated state, the limiting component is separated from the filter device, the second positioning structure is separated from the first positioning structure, and the filter device is movable relative to the housing.

33. The water surface cleaning robot according to claim 32, further comprising:
an elastic element provided on the housing; wherein
when the limiting component is in the limiting state, the elastic element is compressed by the filter device and the housing and thus has an elastic force; and
when the limiting component is in the separated state, the filter device is driven by the elastic force of the elastic element to move outwardly from the filter cavity.

34. The water surface cleaning robot according to claim 33, wherein one of the first positioning structure and the second positioning structure is a positioning slot and the other of the first positioning structure and the second positioning structure is a positioning protrusion, the positioning protrusion is inserted into the positioning slot when the limiting component is in the limiting state, and a side of the filter device away from an opening of the filter cavity is spaced apart from a cavity wall of the filter cavity; and
wherein a slot opening direction of the positioning slot is perpendicular to a moving direction of the filter device.

35. The water surface cleaning robot according to claim 34, wherein the opening of the filter cavity is positioned on a side of the housing in a horizontal direction, and the filter device moves in the horizontal direction; and
the first positioning structure is arranged on a lower side face of the filter device, and the second positioning structure is arranged on an upper side face of the limiting component.

36. The water surface cleaning robot according to claim 35, wherein the limiting component comprises:
an elastic arm, wherein a lower end of the elastic arm is connected to the housing and extends upward, and the elastic arm and the opening of the filter cavity are arranged on a same side of the housing; and
a first support arm connected to an upper end of the elastic arm, wherein the first support arm extends, along the moving direction of the filter cavity, in a direction away from the opening of the filter cavity, and the second positioning structure is disposed on an upper side face of the first support arm.

37. The water surface cleaning robot according to any one of claims 32 to 34, wherein the opening of the filter cavity is positioned on a side of the housing in a horizontal direction, and the filter device moves in the horizontal direction;
the water surface cleaning robot further comprises:
a first guide wheel provided in a rollable manner on one of a lower side face of the filter device and a lower wall face of the filter cavity, wherein the first guide wheel abuts against the other of the lower side face of the filter device and the lower wall face of the filter cavity; wherein
when the filter device moves relative to the housing, the first guide wheel rolls relative to the housing.

38. The water surface cleaning robot according to claim 37, further comprising:
a second guide wheel provided in a rollable manner on one of an upper side face of the filter device and an upper wall face of the filter cavity, wherein the second guide wheel abuts against the other of the upper side face of the filter device and the upper wall face of the filter cavity; wherein
when the filter device moves relative to the housing, the firstguide wheel rolls relative to the housing.

39. The water surface cleaning robot according to claim 38, wherein the filter device comprises:
a box body, wherein each of an upper side face and a lower side face of the box body is provided with a through hole;
a third filter mesh connected to the lower side face of the box body and covering the through hole on the lower side face of the box body; and
a fourth filter mesh connected to the upper side face of the box body and covering the through hole on the upper side face of the box body; wherein
the lower side face of the box body abuts against the first guide wheel, and the first guide wheel is positioned to avoid the third filter mesh, the upper side face of the box body abuts against the second guide wheel, and the second guide wheel is positioned to avoid the fourth filter mesh.

40. The water surface cleaning robot according to claim 1, wherein a receiving cavity is provided inside the housing, the receiving cavity is communicated with the liquid inlet, and a stopping portion is provided inside the receiving cavity;
the filter device is positioned in the receiving cavity in a retractable manner, the liquid inlet is further configured to allow the filter device to enter or exit the receiving cavity, the filter device comprises a first box wall having deformability, an outer surface of the first box wall is provided with a limiting protrusion, and when the filter device is positioned in the receiving cavity, the limiting protrusion abuts against the stopping portion; and
the water surface cleaning robot further comprises a locking member movably connected to the filter device, the locking member has a locked state and an unlocked state, when in the locked state, the locking member abuts against an inner surface of the first box wall and exerts a supporting force on the first box wall to maintain an abutting relationship between the limiting protrusion and the stopping portion; and when in the unlocked state, the locking member is separated from the first box wall.

41. The water surface cleaning robot according to claim 40, wherein the locking member comprises a second support arm and a connecting arm, one end of the connecting arm being connected to the second support arm, and other end of the connecting arm being rotatably connected to the filter device; and
when the locking member is in the locked state, the second support arm abuts against the first box wall and exerts a supporting force on the first box wall; and when the locking member is in the unlocked state, the second support arm is separated from the first box wall.

42. The water surface cleaning robot according to claim 41, wherein two connecting arms are provided, the two connecting arms are positioned at two ends of the second support arm, and the two connecting arms are respectively connected to two opposite box walls of the filter device;
when the filter device is installed in the filter cavity, the locking member is positioned at an end of the filter device closer to the liquid inlet;
the support arm has a supporting plane, and the supporting plane is in contact with the first box wall when the locking member is in the locked state; and
the first box wall is a lower box wall of the filter device.

43. The water surface cleaning robot according to claim 40, wherein a distance from a connection point between the locking member and the filter device to the limiting protrusion along a moving direction of the filter device is less than or equal to 1/5 of a size of the filter device along its own moving direction.

44. The water surface cleaning robot according to claim 40, wherein the filter device comprises a first part and a second part, the first part comprises a tubular main body portion and an end wall positioned at an end of the main body portion, a cross-sectional shape of the main body portion is rectangular;
the second part is a tubular structure, a cross-sectional shape of the second part is rectangular, and the second part is detachably connected to an end of the main body portion away from the end wall; and
wherein the locking member is connected to the second part.

45. The water surface cleaning robot according to claim 44, wherein one of the second part and the main body portion is provided with a snap-fit protrusion, the other of the second part and the main body portion is provided with a clamping slot, and the snap-fit protrusion fits to the clamping slot.

46. The water surface cleaning robot according to claim 45, wherein one of the second part and the main body portion is provided with a limiting lug, the other of the second part and the main body portion is provided with a groove, and the limiting lug fits to the groove.

47. The water surface cleaning robot according to claim 1, wherein the housing is provided with an energy storage device comprising a photovoltaic power generation device configured to supply power to the water surface cleaning robot.

48. A control method for a water surface cleaning robot, wherein
the water surface cleaning robot is controlled to carry out garbage cleaning on a water surface and/or a side and/or a corner; and
the water surface cleaning robot is selected from at least one of the water surface cleaning robots according to any one of claims 1 to 47.

49. The control method according to claim 48, comprising:
obtaining a first distance fed back from a first sensor and a second distance fed back from a second sensor;
determining whether an absolute value of a difference between the first distance and the second distance is less than a preset value; and
when the absolute value is not less than the preset value, adjusting power of at least one of a first pump body and a second pump body based on the first distance and the second distance such that the first distance is equal to the second distance.

50. The control method according to claim 49, wherein adjusting the power of at least one of the first pump body and the second pump body based on the first distance and the second distance such that the first distance is equal to the second distance comprises:
determining whether the first distance is greater than the second distance;
when the first distance is greater than the second distance, controlling the first pump body to reduce the power and/or the second pump body to increase the power;
when the first distance is not greater than the second distance, determining whether the first distance is less than the second distance;
when the first distance is less than the second distance:
controlling the first pump body to increase the power and/or the second pump body to decrease the power;
otherwise:
controlling the power of the first pump body to be equal to the power of the second pump body.

51. The control method according to claim 49, wherein before determining whether the absolute value of the difference between the first distance and the second distance is less than the preset value, the control method further comprises:
determining whether both the first distance and the second distance are not less than a second preset value;
when both the first distance and the second distance are not less than the second preset value, controlling both the first pump body and the second pump body to operate at a first preset power;
when any of the first distance and the second distance is less than the second preset value, controlling both the first pump body and the second pump body to operate at a second preset power, the first preset power being greater than the second preset power.
